# FASCICULE DE BREVET EUROPEEN

(11) **EP 2 794 169 B1**
(45) Date de publication et mention de la délivrance du brevet: **09.01.2019**
(21) Numéro de dépôt: 12812969.9
(22) Date de dépôt: 20.12.2012
(51) Int. Cl.: B23K 1/00, B23K 1/19, B23K 1/20, B23K 35/30, C03C 10/00, C04B 37/00

(54) **PROCÉDÉ D'ASSEMBLAGE DE PIÈCES EN MATÉRIAUX À BASE DE SiC PAR BRASAGE NON RÉACTIF SOUS ATMOSPHÈRE OXYDANTE; COMPOSITION DE BRASURE**
VERFAHREN ZUR ANORDNUNG VON BAUTEILEN AUS SIC-MATERIALIEN DURCH NICHTREAKTIVES LÖTEN IN EINER OXYDIERENDEN ATMOSPHÄRE, LÖTZUSAMMENSETZUNG
METHOD OF ASSEMBLING PARTS MADE OF SIC MATERIALS BY MEANS OF NON-REACTIVE BRAZING IN AN OXIDIZING ATMOSPHERE, BRAZING COMPOSITION

(30) Priorité: 22.12.2011 FR 1162346
(43) Date de publication de la demande: 29.10.2014
(73) Titulaire: Commissariat à l'Énergie Atomique et aux Énergies Alternatives, 75015 Paris (FR)
(72) Inventeur: CHAUMAT, Valérie, F-38760 Saint-paul De Varces (FR); HENNE, Jean-François, F-62400 Bethune (FR); HODAJ, Fiqiri, F-38100 Grenoble (FR)
(74) Mandataire: Brevalex
(86) Numéro de dépôt international: PCT/EP2012/076515
(87) Numéro de publication internationale: WO 2013/092931

(56) Documents cités:
- FR-A1- 2 935 376
- GB-A- 1 246 694
- GB-A- 1 315 319
- US-A1- 2005 079 343
- G. A. RANKIN ET AL: "Calciumoxyd-Aluminiumoxyd-Magnesiumoxyd", ZEITSCHRIFT FUR ANORGANISCHE UND ALLGEMEINE CHEMIE, WILEY - V C H VERLAG GMBH & CO. KGAA, DE, vol. 96, no. 1, 1 janvier 1916 (1916-01-01), pages 291-316, XP002522702, ISSN: 0044-2313, DOI: 10.1002/ZAAC.19160960119

## Description

### DOMAINE TECHNIQUE

La présente invention est relative à un procédé d'assemblage de pièces en matériaux à base de carbure de silicium par brasage non réactif sous atmosphère oxydante, plus précisément sous atmosphère contenant de l'oxygène, notamment sous air, avec une composition de brasure non réactive, afin notamment de réaliser des composants entièrement à base de carbure de silicium, et ce conformément au préambule de la revendication 1 (voir, par exemple, FR2 935 376).

L'invention a trait, en outre, à des compositions de brasure conformément aux revendications 19 et 20 (voir, par exemple, FR2 935 376).

L'invention a enfin trait à une suspension ou pâte de composition de brasure conformément aux revendications 21 et 22.

Par matériaux « à base de carbure de silicium », on entend généralement un matériau dont la teneur en SiC est supérieure ou égale à 50% en masse, de préférence supérieure ou égale à 80% en masse, de préférence encore de 100% en masse, dans ce dernier cas on peut dire que le matériau est constitué ou composé de carbure de silicium.

Ces matériaux à base de carbure de silicium peuvent être notamment du carbure de silicium pur tel que du carbure de silicium pur α (SiCα) ou β (SiCβ) ou des matériaux composites à base de SiC tels que des composite à fibres et/ou à matrice de carbure de silicium.

Le matériau à base de carbure de silicium peut se présenter sous la forme de fibres de carbure de silicium ou de poudre de carbure de silicium frittée ou liée par un liant en céramique.

Le domaine technique de l'invention peut être défini comme étant celui du brasage dit « moyennement réfractaire », c'est-à-dire mis en oeuvre à des températures généralement de 1050°C à 1350°C, de préférence de 1100°C à 1200°C.

Les assemblages concernés par la présente invention sont donc généralement considérés comme « moyennement réfractaires » c'est-à-dire que les températures maximales d'utilisation de ces assemblages vont généralement jusqu'à 1250°C et sont généralement comprises entre 850°C et 1200°C en fonction de la composition de l'alliage de brasage ou de la composition de brasure.

Ces assemblages peuvent rentrer dans la fabrication de composants de formes complexes nécessitant à la fois une très bonne tenue mécanique entre les substrats à base de carbure de silicium, et une étanchéité satisfaisante de part et d'autre du joint.

### ÉTAT DE LA TECHNIQUE ANTÉRIEURE

On sait qu'il est difficile de fabriquer des pièces de grandes dimensions en céramique, en particulier, en SiC. En effet, les tolérances après frittage des composants primaires ou en carbure de silicium de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des composés à base de carbure de silicium.

Il est donc souvent préférable de fabriquer les pièces ou structures de grande dimension et/ou de forme complexe à partir d'éléments en céramiques de forme simple et/ou de petite taille, puis d'assembler ces éléments pour réaliser la structure finale.

Une telle technique est notamment nécessaire pour fabriquer des structures du type échangeur de chaleur, brûleurs, résistances thermiques de composants de structure en carbure de silicium ayant une température d'utilisation, par exemple, jusqu'à 1200°C.

Du fait des températures élevées, voisines par exemple de 1000°C, mises en oeuvre dans les applications des céramiques telles que le carbure de silicium, l'assemblage de ces céramiques par collage avec des adhésifs organiques est exclu, car les températures d'usage de ce type d'assemblage ne peuvent dépasser au maximum 200°C.

Les assemblages purement mécaniques, par exemple par agrafage ou par vissage n'assurent qu'un contact partiel et aléatoire entre les pièces. Les assemblages ainsi obtenus ne peuvent pas être étanches.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier, le carbure de silicium se décompose avant fusion.

Des techniques courantes pour réaliser des assemblages réfractaires de céramiques sont le soudage par diffusion en phase solide, et l'assemblage frittage ou cofrittage.

Dans l'assemblage par soudage diffusion, on applique à haute température une pression au niveau des interfaces pour permettre une inter-diffusion atomique entre les deux substrats. La température doit rester toujours inférieure à la température de fusion du matériau le moins réfractaire et il n'y a donc aucune phase liquide dans le système. Ce type d'assemblage est réalisé soit sous presse dans une seule direction, soit dans une enceinte isostatique. Le soudage diffusion est bien adapté aux assemblages entre deux alliages métalliques et très peu à l'assemblage de matériaux céramiques car les atomes constituant la céramique diffusent très peu au niveau du joint. En outre, le procédé est rédhibitoire d'un point de vue mécanique, car il nécessite de mettre en compression les substrats et les matériaux poreux et fragiles comme des substrats à base de carbure de silicium, risquent d'être fortement endommagés lors de ce chargement mécanique en compression.

L'assemblage-frittage ou cofrittage de pièces en SiC, nécessite également de hautes pressions mais aussi de hautes températures et durées de palier importantes, car ce procédé est basé sur le principe de l'inter-diffusion entre les éléments en SiC.

En d'autres termes, le soudage par diffusion en phase solide ainsi que l'assemblage frittage présentent le désavantage d'être contraignants du point de vue de leur mise en oeuvre car :
- pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).
- dans le cas du cofrittage ou assemblage frittage, les mêmes problèmes demeurent (forme des pièces, complexité de mise en oeuvre) avec en plus la nécessité de contrôler le frittage d'une poudre d'apport à intercaler entre les deux matériaux à assembler.
- ces deux techniques nécessitent en outre l'utilisation de paliers de longue durée (une à plusieurs heures) à haute température puisque les processus mis en jeu font intervenir la diffusion à l'état solide.

Il ressort de ce qui précède, et en résumé, qu'afin de garantir notamment une bonne tenue mécanique et une étanchéité satisfaisante au niveau de l'assemblage, seuls des procédés utilisant une phase liquide, comme le brasage, peuvent être envisagés.

Le brasage est une technique peu coûteuse, facile de mise en oeuvre, qui est la plus couramment utilisée. Des pièces de forme complexe peuvent être réalisées en faisant du brasage, et les opérations de brasage se limitent à placer entre (brasage de type « sandwich ») les pièces à assembler ou à proximité (brasage de type capillaire) du joint entre les deux pièces, un alliage de brasage, appelé brasure, ou un alliage d'apport, cet alliage étant capable de mouiller et de s'étaler sur les interfaces à assembler pour remplir le joint entre les pièces et à faire fondre cet alliage. Après refroidissement, la brasure se solidifie et assure la cohésion de l'assemblage.

De nombreuses compositions de brasure pour les pièces en matériaux à base de carbure de silicium sont peu réfractaires. Il s'agit généralement de compositions de brasure constituées par des alliages métalliques ayant un point de fusion inférieur, voire très inférieur, à 1000°C [1, 2, 3]. Une telle température de fusion est nettement insuffisante pour les applications à hautes températures voisines de 1000°C ou plus, par exemple, jusqu'à 1250°C.

Notons, en outre, que la mise en oeuvre de ces brasures ne peut pas se faire sous air, à cause des problèmes d'oxydation de la brasure.

Par ailleurs, la plupart des éléments chimiques qui font partie de ces compositions de brasure métalliques sont fortement réactifs avec le carbure de silicium dès 500°C et créent des composés fragiles.

Par conséquent, dans le cas d'un brasage mis en oeuvre au-dessus de 1000°C, de telles compositions de brasure ou alliages de brasage attaqueraient chimiquement les matériaux à base de carbure de silicium.

En outre, les alliages les moins réactifs sont aussi les moins réfractaires, comme par exemple, l'alliage AgCuTi avec une matrice en Ag-Cu et un élément actif Ti à faible concentration. Pour les applications plus particulièrement visées par l'invention qui sont celles d'un assemblage moyennement réfractaire, avec une température d'utilisation des assemblages pouvant aller généralement jusqu'à 1000°C voire 1250°C, toutes les compositions de brasure constituées principalement d'argent ou d'argent-cuivre, de cuivre, de nickel, de fer ou de cobalt, de platine, de palladium ou d'or sont donc à exclure à cause de leur forte réactivité et du fait qu'il est impossible de les mettre en oeuvre sous air.

Afin de résoudre les problèmes posés par les compositions de brasure constituées par des alliages métalliques et notamment par des alliages métalliques réactifs, des compositions de brasure ou formulations d'alliages de brasage à base de silicium et à température de fusion supérieure à 1200°C [4, 5, 6] ont été proposées.

Ces alliages de brasage constitués de siliciures métalliques présentent l'avantage de bien mouiller sous vide ou sous atmosphère neutre le carbure de silicium tout en étant très peu réactifs, et d'assurer une bonne interface mécanique étanche entre les substrats à base de carbure de silicium. En revanche, le procédé de brasage utilisant ces compositions de brasure à base de silicium ne peut pas être mis en oeuvre sous air.

En effet, sous air, il se produit une oxydation des brasures et du SiC, ce qui ne permet pas un bon mouillage. Par conséquent, les compositions de brasure, alliages de brasage riches en silicium ne sont pas adaptés au brasage à température supérieure à 1000°C sous air.

Par ailleurs, des compositions de brasure, alliages de brasage, à base d'un mélange d'oxydes, pour l'assemblage de matériaux à base de carbure de silicium ont été proposés.

Avec de telles compositions de brasure, le procédé de brasage est, dans la majorité des cas, mis en oeuvre sous une atmosphère protectrice, par exemple de gaz neutre, ou sous vide, entre 700°C et 1600°C selon la composition de l'alliage de brasage.

FERRARIS et col. ont ainsi réalisé l'assemblage sous argon de composites SiC / SiC avec des alliages tels que l'alliage ZnO-B₂O₃-MgO-SiO₂-Al₂O₃-Na₂O mis en oeuvre à 1200°C [7] et l'alliage 49,77 CaO-50,23 Al₂O₃ (% massique) mis en oeuvre à 1500°C [8, 9].

Le document FR-A-2 538 370 décrit également le brasage sous argon à 1400°C du SiC avec une composition de brasure constituée de SiO₂-Al₂O₃-MgO-Y₂O₃ dont la composition en % massique est la suivante : 32,5 % ≤ SiO₂+MgO ≤ 77,5% ; 17,5 % ≤ Al₂O₃ ≤62,5% ; 5 % ≤ Y₂O₃ ≤ 50 %) [10].

PERHAM et col. ont réalisé le brasage du SiC sous vide entre 1465°C et 1550°C avec la composition de brasure 52,5 % SiO₂ - 32,0% Al₂O₃ - 13,5%MgO-2,0%BaO [11].

TAMARI et col. proposent une composition de brasure à base de Si₃N₄-Y₂O₃-La₂O₃-MgO pour braser le carbure de silicium entre 1600°C et 1800°C sous argon [12].

Enfin, LEE et col. [13] décrivent le brasage du SiC sous argon entre 1350°C et 1530°C à l'aide d'une brasure de composition 60 SiO₂- 25 Al₂O₃-15MgO (% massique).

Pour résumer, peu de travaux présentent des opérations de brasage sous atmosphère oxydante, notamment sous air, du carbure de silicium. Les résultats de brasage sous argon ou sous vide ne peuvent pas être transposés à une atmosphère oxydante, notamment à l'air, en particulier en ce qui concerne le comportement physico-chimique vis-à-vis de l'environnement (diffusion de l'oxygène dans le mélange de verre...).

Néanmoins, quelques travaux concernent le brasage sous air du carbure de silicium avec des compositions de brasure, alliages de brasage, à base d'un mélange d'oxydes.

Ainsi, le brasage sous air du carbure de silicium à partir d'un mélange d'oxydes a été réalisé par LIPMANN et col. [14, 15]. Ces auteurs proposent un procédé d'assemblage sous air du SiC par brasage assisté par laser avec une composition de brasure du système Y₂O₃-SiO₂-Al₂O₃ ou du système ZrO₂-SiO₂-Al₂O₃.

L'inconvénient principal du procédé de brasage assisté par laser, mis en oeuvre dans ces documents, est qu'il n'est pas adapté à toutes les géométries et/ou tailles de pièces à assembler. En particulier, le procédé de brasage assisté par laser ne convient pas aux pièces de grandes dimensions, plus précisément aux pièces comportant de grandes surfaces à braser, et/ou de forme complexe.

Ainsi, les surfaces assemblées dans les documents [14, 15] sont très petites, de l'ordre du 1 cm².

D'autre part, ce procédé de brasage assisté par laser est onéreux.

Enfin, les compositions de brasure décrites dans les documents [14] et [15] résistent à de hautes températures, à savoir à des températures au-delà de 1600°C, et exigent en conséquence que les opérations de brasage soient aussi menées à haute température, ce qui risque de dégrader le matériau à braser à base de SiC tel que du SiC fritté ou un composite à base de SiC.

Le maintien à ces hautes températures doit être limité car il se produit alors une oxydation du SiC lorsque le brasage est réalisé sous air.

Par exemple, ces températures élevées ne sont pas tolérées par certains matériaux, tels que des composites, dont les propriétés sont dégradées de façon irréversibles au-delà de 1100°C. A titre d'exemple de ces matériaux, on peut citer le composite CERASEP® A40C, constitué d'une matrice SiC et de fibres de SiC.

On peut dire que les compositions de brasure, décrites dans les documents [14] et [15] sont limitées à un brasage mis en oeuvre de façon très localisée et très rapide pour de faibles surfaces à braser.

De plus, ces compositions de brasure sont interdites pour le brasage de certains matériaux à base de SiC du fait de la dégradation de ces matériaux à la température élevée à laquelle est réalisé le brasage.

Ceci restreint donc fortement les applications des compositions de brasure décrites dans les documents [14] et [15].

MAILLIART et col. [16] ont proposé des alliages de brasage dans les systèmes SiO₂ - Al₂O₃ - CaO et Al₂O₃ - CaO - MgO pour le brasage sous air.

Le domaine recommandé par les inventeurs pour le premier système est, en pourcentages massiques, de 75% à 7% de SiO₂, de 60% à 6% de Al₂O₃, et de 60% à 10% de CaO. L'inconvénient de ce procédé est qu'il impose une température de brasage un peu élevée, à savoir entre 1350°C et 1650°C pour obtenir une adhérence suffisante et des propriétés mécaniques élevées.

Il est en effet montré dans le document [16] que le brasage à 1100°C pendant 120 minutes, dans le domaine visqueux du verre basé sur le système SiO₂ - Al₂O₃ - CaO, permet l'assemblage de matériaux à base de SiC, mais cet assemblage a une tenue mécanique nettement inférieure à celle obtenue à plus haute température.

Cela ressort clairement des essais mécaniques réalisés dans l'exemple n°2 de ce document [16] sur des éprouvettes constituées par deux pièces en carbure de silicium SiC α pur fritté assemblées par brasage avec une composition de brasure constituée de 62% en masse de SiO₂, 15% en masse de Al₂O₃ et 23% en masse de CaO.

Dans une première série d'essais, on prépare cinq éprouvettes par brasage avec cette composition de brasure, en mettant en oeuvre un cycle thermique de brasage à 1590°C pendant 10 minutes, puis on réalise des essais de compression/cisaillement sur ces éprouvettes.

Dans une seconde série d'essais, on prépare deux autres éprouvettes par brasage avec cette composition de brasure, en mettant en oeuvre un cycle thermique de brasage à 1100°C pendant 120 minutes, puis on réalise des essais de compression/cisaillement sur ces éprouvettes.

La première série d'essais sur les éprouvettes de compression/cisaillement assemblées à 1590°C pendant 10 minutes donne une moyenne de contrainte à la rupture de 42 MPa et la seconde série d'essais sur les éprouvettes de compression/cisaillement assemblées à 1100°C donne une moyenne de contrainte à la rupture 8,5 MPa.

Pour obtenir des propriétés mécaniques satisfaisantes des assemblages brasés, il est donc nécessaire selon le document [16] d'utiliser des températures de brasage élevées voisines de 1600°C et notamment très supérieures à 1100°C.

Or, il serait très intéressant de réaliser des cycles de brasage sous air avec le système SiO₂ - Al₂O₃ - CaO, à une température inférieure aux températures mises en oeuvre dans le document [16], et notamment à une température voisine de 1100°C, voire même inférieure à 1100°C, car des températures supérieures ne sont pas tolérées par certains matériaux tels que des composites. Les propriétés de ces composites sont en effet dégradées de façon irréversibles en particulier au-delà de 1100°C, comme c'est le cas par exemple du composite CERASEP® A40C constitué d'une matrice SiC et de fibres de SiC.

Il existe donc, au vu de ce qui précède, un besoin pour un procédé permettant de réaliser, sous une atmosphère oxydante et notamment sous air, à une température inférieure aux températures mises en oeuvre dans le document [16] et notamment à une température voisine de 1100°C, le brasage de pièces en matériaux à base de carbure de silicium, quelle que soit leur forme et/ou leur taille afin d'obtenir (malgré la température de brasage modérée utilisée) un assemblage possédant une excellente tenue mécanique, et moyennement réfractaire c'est-à-dire avec une température d'utilisation, d'usage, maximale supérieure à 500°C et pouvant aller jusqu'à 1250°C, de préférence de 850°C à 1200°C, de préférence encore de 850°C à 1000°C.

Il existe en particulier un besoin pour un procédé d'assemblage par brasage permettant de réaliser sous une atmosphère oxydante, notamment sous air, le brasage moyennement réfractaire de pièces à base de carbure de silicium de grandes tailles et/ou de géométries complexes, présentant notamment des surfaces à braser importantes.

Il existe en outre un besoin pour un procédé d'assemblage par brasage et pour la composition de brasure associée qui assurent à la fois une étanchéité du joint entre deux pièces en matériau à base de carbure de silicium, un bon remplissage du joint par la brasure ainsi qu'une tenue mécanique de l'assemblage satisfaisante au-dessus de 500°C et jusqu'à 850°C, voire 1250°C, selon la composition de brasure.

En d'autres termes, il existe actuellement un besoin non satisfait pour un procédé de brasage et pour la composition de brasure associée, qui permettent de réaliser, entre deux matériaux à base de SiC, par brasage sous une atmosphère oxydante, notamment sous air, et à une température modérée, des liaisons fortes, mais aussi moyennement réfractaires, c'est-à-dire pouvant notamment résister à des températures d'usage supérieures à 500°C, et pouvant aller jusqu'à 850°C et même au-delà, c'est-à-dire 1000°C voire 1200°C et même 1250°C.

Aucun des procédés de brasage et des compositions de brasure décrits dans les documents de l'art antérieur et notamment dans le document [16] ne répond aux besoins énumérés ci-dessus.

En particulier, aucun des procédés et des compositions de l'art antérieur ne remplit simultanément les critères suivants, mis en évidence par les inventeurs, et qui sont fondamentaux pour réaliser des composants de structure en céramique, telle que du SiC impliquant des joints, moyennement réfractaires :
1) la composition de brasure doit permettre de réaliser une liaison forte entre les deux pièces en matériau à base de carbure de silicium, ce qui implique une composition de brasure non réactive, c'est-à-dire chimiquement compatible avec le carbure de silicium, et qui ne forme pas de composés fragiles avec celui-ci.
2) la composition de brasure doit fondamentalement être compatible avec une atmosphère de brasage oxydante constituée par exemple par un gaz contenant de l'oxygène tel que de l'air ou de l'argon oxygéné et ne doit pas être dégradée par celle-ci.
3) la composition de brasure doit bien mouiller le carbure de silicium et bien adhérer à celui-ci.
4) la composition de brasure doit être compatible avec tous les dispositifs de chauffage notamment les dispositifs de chauffage rapides et/ou localisés.
5) la composition de brasure doit avoir un coefficient de dilatation adapté au SiC, c'est-à-dire proche du coefficient de dilatation, de celui-ci pour supprimer toute contrainte résiduelle qui pourrait apparaître au sein du joint lors du refroidissement et garantir qu'il n'y ait pas d'amorce de fissures, ce qui serait dommageable à la tenue mécanique de l'assemblage.
6) la composition de brasure doit être constituée d'un nombre limité d'éléments, afin de faciliter sa préparation et sa mise en oeuvre.
7) le joint doit être moyennement réfractaire, c'est-à-dire avec une température de brasage de 1050°C à 1350°C, de préférence voisine de 1100°C, lui permettant de résister à des températures d'usage généralement supérieures à 500°C, par exemple de 850°C à 1000°C voire jusqu'à 1250°C , mais tout en n'étant pas trop réfractaire pour ne pas avoir une température de brasage trop élevée susceptible de provoquer éventuellement une oxydation de la composition sous une atmosphère oxydante et notamment sous air, et tout en possédant une excellente tenue mécanique.

Enfin, le procédé et la brasure associée doivent permettre le brasage, l'assemblage de tout type de matériau à base de carbure de silicium et doivent pouvoir facilement s'adapter à toute céramique spécifique à base de carbure de silicium.

Le but de l'invention est donc de fournir un procédé d'assemblage par brasage de pièces ou composants en matériaux à base de carbure de silicium qui réponde, entre autres, aux besoins cités plus haut, qui satisfait, entre autres, à l'ensemble des exigences et critères mentionnés ci-dessus, qui élimine les inconvénients, défauts, limitations rencontrés avec les procédés de l'art antérieur, et qui permette notamment de réaliser des joints moyennement réfractaires, à ténacité élevée et exempts de fissuration aussi bien lors de l'élaboration du joint que dans les conditions du fonctionnement.

Plus précisément, le but de l'invention est de réaliser des cycles de brasage sous air avec le système SiO₂ - Al₂O₃ - CaO [16] à une température inférieure aux températures mises en oeuvre dans le document [16] et de préférence voisine de 1100°C, pour obtenir des assemblages dont la tenue mécanique est satisfaisante et est au moins égale à la tenue mécanique des assemblages obtenus à plus haute température par exemple voisine de 1600°C dans le document [16].

### EXPOSÉ DE L'INVENTION

Ce but, et d'autres encore, sont atteints conformément à l'invention par un procédé d'assemblage d'au moins deux pièces en matériaux à base de carbure de silicium par brasage non-réactif sous une atmosphère oxydante, chacune des pièces comprenant une surface à assembler, dans lequel on met en contact les pièces avec une composition de brasure non-réactive, on chauffe l'ensemble formé par les pièces et la composition de brasure à une température de brasage suffisante pour soit faire fondre totalement ou au moins partiellement la composition de brasure, soit rendre visqueuse la composition de brasure, et on refroidit les pièces et la composition de brasure afin de former après refroidissement de celle-ci jusqu'à la température ambiante un joint moyennement réfractaire ; dans lequel la composition de brasure non réactive est une composition A constituée de silice (SiO₂), d'alumine (Al₂O₃), et d'oxyde de calcium (CaO), ou bien une composition B, constituée d'alumine (Al₂O₃), d'oxyde de calcium (CaO), et d'oxyde de magnésium (MgO), et dans lequel avant de chauffer l'ensemble formé par les pièces et la composition de brasure à la température de brasage, on réalise un apport en silicium non oxydé (c'est-à-dire que le silicium n'est pas sous la forme de SiOₓ et notamment de SiO₂, mais bien sous la forme de Si élémentaire) sur les surfaces à assembler des pièces à assembler et/ou dans les couches de surface comprenant les surfaces à assembler des pièces à assembler, et/ou dans la composition de brasure.

On pourrait donc réaliser un apport en silicium à la fois sur les surfaces à assembler des pièces, et dans les couches de surface comprenant les surfaces à assembler des pièces, et dans la composition de brasure.

Pour rendre visqueuse la composition de brasure, on utilise une température de brasage qui est légèrement en-dessous du point de fusion de la composition de brasure.

Par température de brasage « légèrement en dessous du point de fusion de la composition de brasure », on entend généralement que la température de brasage peut aller jusqu'à 100°C en-dessous du point de fusion.

Le procédé selon l'invention, qui est un procédé de brasage sous une atmosphère oxydante, notamment sous air, mettant en oeuvre une composition de brasure spécifique constituée de trois oxydes spécifiques (qui n'est autre que la composition de brasure décrite dans le document [16]), et dans lequel on réalise, préalablement au brasage, un apport en silicium sur les surfaces à assembler des pièces à assembler et/ou dans les couches de surface comprenant les surfaces à assembler des pièces à assembler, et/ou dans la composition de brasure n'a jamais été décrit dans l'art antérieur.

En particulier, le fait de réaliser préalablement au brasage un apport en silicium sur les surfaces à assembler des pièces à assembler et/ou dans les couches de surface comprenant les surfaces à assembler des pièces à assembler, et/ou dans la composition de brasure n'est en aucune manière mentionné ou suggéré dans les documents de l'art antérieur cités plus haut et notamment dans le document [16].

De manière étonnante, en réalisant cet apport en silicium et/ou en enrichissant ou en saturant la composition de brasure en silicium, il est possible avec les compositions de brasure décrites dans le document [16] de réaliser le brasage sous une atmosphère oxydante, notamment sous air, de pièces en matériaux à base de carbure de silicium à une température de brasage inférieure aux températures de brasage mises en oeuvre dans le document [16], par exemple à une température de brasage voisine de 1100°C, tout en obtenant une tenue mécanique satisfaisante de l'assemblage, par exemple au moins égale à la tenue mécanique d'assemblages obtenus à plus haute température par exemple à environ 1600°C dans le document [16] (voir les exemples).

Le procédé selon l'invention répond aux besoins, satisfait à l'ensemble des exigences et des critères mentionnés ci-dessus, et ne présente pas les inconvénients des procédés de l'art antérieur et notamment du procédé qui fait l'objet du document [16], cité plus haut.

On peut dire que le procédé selon l'invention présente tous les avantages du procédé décrit dans le document [16] liés au fait que le procédé selon l'invention met en oeuvre les mêmes compositions de brasure A et B, mais qu'il en surmonte un des inconvénients majeurs en permettant d'obtenir des assemblages à tenue mécanique élevée à une température de brasage modérée par exemple voisine de 1100°C, alors qu'une tenue mécanique analogue n'est obtenue, avec les mêmes compositions de brasure, qu'à une température très élevée, d'environ 1600°C, dans le document [16].

Le procédé selon l'invention permet donc pour la première fois, de réaliser par brasage, des assemblages à haute tenue mécanique de pièces en matériaux tels que des composites, qui ne tolèrent pas des températures élevées, et dont les propriétés sont dégradées de façon irréversibles au-delà de 1100°C.

Le procédé selon l'invention permet la préparation sous une atmosphère oxydante, notamment sous air, d'assemblages moyennement réfractaires, (c'est-à-dire avec une température d'utilisation supérieure à 850°C, voire supérieure à 1000°C et jusqu'à 1200°C, voire 1250°C) de pièces en matériaux à base de carbure de silicium quelle que soit leur géométrie, même très complexe et/ou leur taille.

Le procédé selon l'invention assure dans tous les cas, notamment, une bonne étanchéité du joint, un bon remplissage du joint par la brasure ainsi qu'une excellente tenue mécanique de l'assemblage au-dessus de 500°C.

Le procédé selon l'invention est en outre simple, fiable, facile à mettre en oeuvre et au total peu onéreux.

En d'autres termes, les multiples avantages et effets surprenants de l'invention peuvent être énumérés comme suit, sans que cette énumération soit considérée comme limitative :
- l'assemblage obtenu selon l'invention permet de garantir un très bon accrochage mécanique entre les substrats à base de carbure de silicium pour des températures maximales d'utilisation allant par exemple de 850°C à 1000°C et jusqu'à 1250°C selon la composition de brasure, la composition de l'alliage de brasage. Les ruptures ont lieu en mode "cohésif", c'est-à-dire que les fissures ont lieu dans les substrats à base de carbure de silicium et non pas au niveau de l'interface.
- de même, les joints brasés obtenus selon le procédé sont étanches. Le procédé est par conséquent adapté pour des opérations de scellement devant résister à des températures maximales par exemple entre 850°C et 1200°C selon la composition de l'alliage de brasage.
- une réactivité extrêmement modérée de l'alliage de brasage sur les substrats à base de carbure de silicium a été observée. Il n'y a pas de zones fragilisantes complexes et poreuses au niveau de l'interface.
- une autre propriété remarquable du procédé est l'homogénéité du joint obtenu après brasage.
- le procédé selon l'invention permet le brasage sous une atmosphère oxydante et notamment sous air, ce qui diminue grandement les coûts financiers du procédé par rapport aux procédés dans lesquels l'opération de brasage est réalisée dans un four sous atmosphère protectrice par exemple d'argon, ou sous un vide secondaire. La température de brasage est peu élevée et ne dépasse pas 1350°C.
- le procédé de brasage sous une atmosphère oxydante, notamment sous air, selon l'invention peut également être réalisé en faisant appel à une technique de chauffage rapide telle que le chauffage par induction et/ou à un chauffage localisé.

L'atmosphère oxydante est généralement une atmosphère contenant de l'oxygène, telle qu'une atmosphère d'air, d'argon oxygéné ou d'hélium oxygéné (mélange d'argon et d'oxygène ou d'hélium et d'oxygène).

L'apport en silicium peut être réalisé en préparant un revêtement en silicium sur les surfaces à assembler des pièces à assembler.

On prépare un revêtement en silicium sur toutes les surfaces à assembler de toutes les pièces (deux ou plus) à assembler.

Ce revêtement peut être préparé par un procédé de dépôt chimique en phase vapeur (« *Chemical Vapour Deposition* » ou CVD en anglais), un procédé de dépôt physique en phase vapeur (« *Physical Vapour Deposition* » ou PVD en anglais), un procédé de dépôt physique en phase vapeur par faisceau d'électrons (« *Electron Beam Physical Vapour Deposition* » ou EBPVD), ou par un procédé de dépôt en phase liquide.

On peut réaliser l'apport en silicium dans les couches de surface comprenant les surfaces à assembler des pièces, les couches de surface étant constituées par du SiC enrichi en silicium par rapport à la stoechiométrie du SiC, ou par du silicium pur.

L'apport en silicium peut être réalisé dans la composition de brasure.

La composition de brasure peut ainsi être enrichie en silicium non oxydé dissous (en solution) à une concentration en silicium non oxydé dissous allant jusqu'à la concentration correspondant à la saturation de la composition de brasure en silicium non oxydé dissous.

De préférence, la composition de brasure est enrichie en silicium non oxydé dissous à une concentration qui est proche (généralement à de 1% à 2% massique) de la concentration correspondant à la saturation de la composition de brasure en silicium non oxydé dissous mais sans toutefois atteindre cette dernière, ou qui est égale à la concentration correspondant à la saturation de la composition de brasure en silicium non oxydé dissous.

Précisons que, lorsque l'on parle de saturation, il s'agit de la solubilité maximale du silicium non oxydé dans le verre liquide à la température de l'élaboration.

En effet, lorsque l'on met le verre liquide en contact avec du silicium solide, on ne peut pas mettre en solution dans le verre liquide plus de silicium que la solubilité maximale.

La teneur en silicium dissous, non oxydé (pas sous forme de SiO₂) dans la composition de brasure enrichie en silicium non oxydé dissous est généralement de 0,1% à 2,6% en masse (en limite de solubilité) de préférence de plus de 0,1% à 2,6% en masse, de préférence encore de 0,7% à 1,3% en masse, mieux de 0,7% à 1% en masse par rapport à la masse totale de la composition de brasure et du silicium.

Avantageusement, la composition A peut être constituée, en pourcentages massiques, de 75% à 7% de SiO₂, de 60% à 6% de Al₂O₃ et de 60% à 10% de CaO.

Cette plage avantageuse, ce domaine avantageux, de pourcentages massiques pour la composition A peuvent être divisés en trois sous-domaines n°1, n°2, et n°3.

Dans le sous-domaine n°1, la composition A est constituée, en pourcentages massiques, de 70% à 55% de SiO₂, de 22% à 8% d'Al₂O₃, et de 35% à 15% de CaO.

Les compositions préférées de ce sous-domaine n°1 de la composition A sont proches de ou correspondent à la composition suivante : une composition constituée, en pourcentages massiques, de 62% de SiO₂, de 15% de Al₂O₃, et de 23% de CaO.

Dans le sous-domaine n°2, la composition A est constituée, en pourcentages massiques, de 55% à 38% de SiO₂, de 25% à 12% d'Al₂O₃, et de 45% à 30% de CaO.

Les compositions préférées de ce sous-domaine n°2 de la composition A sont proches de ou correspondent à la composition suivante : une composition constituée, en pourcentages massiques, de 42% de SiO₂, de 20% de Al₂O₃, et de 38% de CaO.

Dans le sous-domaine n°3, la composition A est constituée, en pourcentages massiques, de 38% à 8% de SiO₂, de 55% à 8% d'Al₂O₃, et de 55% à 28% de CaO.

Les compositions préférées de ce sous-domaine n°3 de la composition A sont proches de ou correspondent à la composition suivante : une composition constituée, en pourcentages massiques, de 22% de SiO₂, de 37% de Al₂O₃, et de 41% de CaO.

Avantageusement, la composition B est constituée, en pourcentages massiques, de 70% à 35% de Al₂O₃, de 65% à 25% de CaO, et de 20% à 1% de MgO.

Les compositions préférées de ce sous-domaine de la composition B sont proches de ou correspondent à la composition suivante : une composition constituée en pourcentages massiques, de 50,5% de Al₂O₃, de 44,0% de CaO, et de 5,5% de MgO.

Il est éventuellement possible d'ajouter de l'oxyde de titane TiO₂ aux compositions de brasure A ou B mises en oeuvre selon l'invention, en particulier aux compositions A.

L'oxyde de titane est généralement ajouté à raison de 1% en masse à 10% en masse par rapport à la masse totale de la composition de brasure A ou B telle que définie plus haut, et de l'oxyde de titane.

Il est également éventuellement possible d'ajouter de l'oxyde de bore B₂O₃ aux compositions de brasure mises en oeuvre selon l'invention afin d'en abaisser le point de fusion.

L'oxyde de bore est généralement ajouté à raison de 1% en masse à 10% en masse par rapport à la masse totale de la composition de brasure A ou B telle que définie plus haut, et de l'oxyde de bore.

L'addition d'oxyde de bore permet d'abaisser la viscosité du verre.

Il est également éventuellement possible d'ajouter du CaF₂ aux compositions de brasure mises en oeuvre selon l'invention afin d'abaisser la viscosité du verre.

Le CaF₂ est généralement ajouté à raison de 1% en masse à 10% en masse par rapport à la masse totale de la composition de brasure A ou B, et du CaF₂.

L'addition de CaF₂ permet d'abaisser la viscosité du verre.

Avantageusement dans le procédé selon l'invention, on peut former une poudre de composition de brasure, on met en suspension cette poudre dans un liant organique de façon à obtenir une suspension ou pâte de composition de brasure, et on dépose sur au moins une surface d'au moins une des pièces à assembler la suspension ou pâte de composition de brasure obtenue.

Ainsi, on peut enduire une surface à assembler d'au moins l'une des pièces à assembler avec la suspension ou pâte de composition de brasure, puis mettre en contact les surfaces à assembler des pièces de façon à ce que la suspension ou pâte soit intercalée (prise en sandwich) entre celles-ci.

Ou bien on peut mettre en contact les surfaces à assembler des pièces à assembler en observant un décalage entre celles-ci de façon à créer une surface libre susceptible de recevoir la suspension ou pâte à proximité du joint formé par les surfaces à assembler des pièces assembler, puis on peut déposer la suspension ou pâte sur cette surface libre, par exemple sous la forme d'un cordon.

Le brasage peut être effectué à une température de brasage de 1050°C à 1350°C, de préférence de 1100°C à 1200°C, pendant une durée de 1 à 240 minutes, de préférence de 10 à 120 minutes.

La température de brasage doit être inférieure à la température au-delà de laquelle le matériau à base SiC à assembler est dégradé.

L'ensemble formé par les pièces et la composition de brasure peut être amené à la température (palier) de brasage en l'introduisant directement dans un dispositif, tel qu'un four, déjà porté à la température de brasage, ou bien l'ensemble formé par les pièces et la composition de brasure est amené à la température de brasage en observant une montée en température depuis la température ambiante.

L'invention concerne également une composition de brasure (moyennement réfractaire, non réactive) B, constituée d'alumine (Al₂O₃), d'oxyde de calcium (CaO), et d'oxyde de magnésium (MgO), ladite composition de brasure comprenant en outre du silicium dissous, non oxydé.

La composition de brasure est de préférence saturée en silicium dissous non oxydé.

Toutefois, le procédé selon l'invention peut être mis en oeuvre de manière satisfaisante même en-dessous de la limite de solubilité et on peut notamment envisager une mise en solution de Si non oxydé en restant proche de la limite de solubilité.

La teneur en silicium dissous, non oxydé (de la composition de brasure enrichie ou saturée) est généralement de 0,1% à 2,6% en masse, de préférence de plus de 0,1% en masse à 2,6% en masse, de préférence encore de 0,7% à 1,3% en masse, mieux de 0,7% à 1% en masse par rapport à la masse totale de la composition de brasure telle que définie plus haut et du silicium.

Précisons de nouveau que lorsque l'on parle de saturation, il s'agit de la solubilité maximale du silicium dans le verre liquide (composition A ou B) à la température de l'élaboration.

En effet, lorsque l'on met le verre liquide en contact avec du silicium solide, on ne peut pas mettre en solution dans le verre liquide plus de silicium que la solubilité maximale.

Comme on l'a également précisé plus haut, de l'oxyde de titane, et/ou de l'oxyde de bore et/ou du CaF₂ peut (peuvent) être ajouté(s) à la composition de brasure selon l'invention.

L'invention a trait aussi à une suspension ou pâte de composition de brasure comprenant une poudre d'une composition de brasure en suspension dans un liant organique ; ladite composition de brasure étant choisie parmi une composition A constituée de silice (SiO₂), d'alumine (Al₂O₃), et d'oxyde de calcium (CaO) et une composition B constituée d'alumine (Al₂O₃), d'oxyde de calcium (CaO), et d'oxyde de magnésium (MgO), ladite composition de brasure comprenant en outre du silicium dissous, non oxydé.

Les compositions de brasure A et B incluses dans cette suspension ont déjà été définies plus haut.

Dans ladite suspension, de l'oxyde de titane, et/ou de l'oxyde de bore et/ou du CaF₂ peut (peuvent) être ajouté(s) à la composition de brasure.

D'autres caractéristiques et avantages de l'invention ressortiront mieux à la lecture de la description qui va suivre, donnée à titre illustratif et non limitatif en relation avec les dessins joints.

### BRÈVE DESCRIPTION DES DESSINS

- La Figure 1 est une vue schématique montrant la disposition des plaques de matériau à base de SiC et de la pâte de composition de brasure pour le brasage en configuration « sandwich ».
- La Figure 2 est une vue schématique qui montre une plaque de matériau à base de SiC recouvert sur une de ses faces de pâte de composition de brasure en vue d'un brasage en configuration « sandwich » avec des plaques décalées.
- La Figure 3 est une vue schématique montrant la disposition des plaques de matériau à base de SiC et de la pâte de composition de brasure pour un brasage en configuration « sandwich » avec des plaques décalées.
- La Figure 4 est une vue schématique montrant la disposition des plaques de matériau à base de SiC et de la pâte de composition de brasure pour le brasage en configuration capillaire.
- La Figure 5 est un graphique qui représente le cycle thermique de brasage utilisé dans l'exemple 1 pour saturer en silicium le mélange d'oxydes.
   En abscisse est portée la durée en minutes depuis le début du traitement thermique, et en ordonnée est portée la température T en °C.
- La Figure 6 est une photographie prise au microscope électronique à balayage (MEB) de l'interface de l'assemblage verre-composite du Lot A réalisé dans l'exemple 2.
   L'échelle indiquée sur la Figure 6 représente 20 µm.
- La Figure 7 est une photographie prise au microscope électronique à balayage (MEB) de l'interface de l'assemblage verre-composite du Lot B réalisé dans l'exemple 2.
   L'échelle indiquée sur la Figure 7 représente 50 µm.
- La Figure 8 est une vue schématique des éprouvettes utilisées lors d'un test de compression/cisaillement des joints et assemblages préparés dans les exemples 3, 4, et 5.

### EXPOSÉ DÉTAILLÉ DE MODES DE RÉALISATION PARTICULIERS

La première étape du procédé selon l'invention consiste, tout d'abord, généralement, à préparer, élaborer une composition de brasure, en d'autres termes un alliage de brasage, sans silicium ajouté, sans apport de silicium.

L'alliage de brasage selon l'invention est un alliage ternaire, soit du système Silice (SiO₂) - Alumine (Al₂O₃) - Oxyde de Calcium (CaO) (Composition de brasure A), soit du système Alumine (Al₂O₃) - Oxyde de Calcium (CaO) - Oxyde de Magnésium (MgO) (Composition de brasure B). Les proportions massiques préférées pour chacune des compositions A et B ont été mentionnées ci-dessus.

La composition de brasure est, généralement, une composition pulvérulente qui peut être préparée, en synthétisant, tout d'abord, à partir des différents oxydes purs et/ou de composés constitués par plusieurs de ces oxydes un verre contenant ces oxydes.

Des exemples de tels composés constitués par plusieurs oxydes sont la mullite qui est le composé 3Al₂O₃-2SiO₂, le composé CaO-Al₂O₃, et le composé CaO-SiO₂.

Ces oxydes purs ou composés sont généralement sous la forme de poudres. Ils sont pesés en respectant les proportions voulues dans la composition de brasure finale que l'on souhaite obtenir, puis ils sont mélangés et broyés dans tout appareil adéquat, tel qu'un mortier.

Pour un alliage du système SiO₂ - Al₂O₃ - CaO, la brasure est préparée soit à partir de poudres de silice, de mullite (composé défini 3Al₂O₃-2SiO₂) et de la poudre du composé CaO-SiO₂ (par exemple pour la composition A1), soit à partir de poudre d'alumine et de la poudre du composé CaO-SiO₂ (par exemple pour la composition A2), soit à partir de poudre du composé CaO-SiO₂ et du composé CaO-Al₂O₃ (par exemple pour la composition A3).

Pour un alliage du système Al₂O₃ - CaO - MgO, la brasure est préparée à partir des poudres CaO, MgO, Al₂O₃ et CaO-Al₂O₃.

Il est possible d'améliorer les propriétés des verres du système SiO₂-Al₂O₃-CaO (composition de brasure A) en les faisant cristalliser par ajout d'oxyde de titane TiO₂, qui est un agent de nucléation. Typiquement, on ajoutera quelques % en masse de TiO₂ par exemple de 1% à 10% en masse de TiO₂ par rapport à la masse totale de la composition de brasure et du TiO₂. En revanche, les verres du système Al₂O₃-CaO-MgO cristallisent généralement sans cet ajout.

Notons également que la température de fusion de ces alliages de brasage, qu'il s'agisse de la composition de brasure A ou de la composition de brasure B peut être diminuée si besoin par ajout d'oxyde de bore B₂O₃, à raison par exemple de 1% à 10% en masse de B₂O₃ par rapport à la masse totale de la composition de brasure et de l'oxyde de bore, et/ou par ajout de CaF₂, à raison par exemple de 1% à 10% en masse de CaF₂ par rapport à la masse totale de la composition de brasure et du CaF₂.

L'oxyde de bore et le CaF₂ abaissent la viscosité du verre formant la composition de brasure, ils augmentent la vitesse de remplissage des joints notamment lorsque le brasage est réalisé en configuration capillaire.

Le mélange de poudres broyées est ensuite introduit dans un creuset généralement en platine, et on fait fondre les différents constituants du mélange de poudres en les soumettant par exemple à un palier de 4 heures sous air à 1590°C ou 1640°C selon la composition de l'alliage de brasage. Après refroidissement, on obtient un verre homogène.

Le verre obtenu est récupéré.

Deux modes de réalisation du procédé selon l'invention sont alors possible pour réaliser l'assemblage par brasage de pièces en matériaux à base de carbure de silicium.

Chacun de ces modes de réalisation est défini par une manière différente de réaliser l'apport en silicium.

Selon un premier mode de réalisation du procédé selon l'invention, l'apport en silicium est réalisé sur les surfaces à assembler des pièces à assembler et/ou dans les couches de surface comprenant les surfaces à assembler des pièces à assembler.

Le verre obtenu comme décrit plus haut est broyé dans un mortier ou tout autre dispositif adéquat pour obtenir une poudre de granulométrie adéquate dont les grains ont, par exemple, un diamètre de 10 à 250 µm.

Le verre broyé qui constitue donc la poudre de composition de brasure est ensuite mis en suspension de manière classique dans un cément, liant, gel organique liquide, généralement à la fois visqueux et collant afin d'obtenir une pâte, suspension de composition de brasure permettant un étalement homogène sur les surfaces des pièces, substrats à base de carbure de silicium à braser.

Le liant, cément, gel se décompose généralement par exemple entre 100°C et 300°C sans laisser de traces. Il peut s'agir par exemple d'un cément de type NICROBRAZ®, ou d'un gel de type gel VITTA®.

Les pièces en matériaux à base de SiC à assembler sont en général au nombre de deux, mais on peut aussi assembler simultanément un plus grand nombre de pièces pouvant aller jusqu'à 100.

Par pièce en matériaux à base de SiC, on entend généralement tout élément, ou entité de forme et de taille quelconques entrant par exemple, après assemblage avec une ou plusieurs autres pièces, dans des structures de plus grandes dimensions.

Selon l'invention, il est possible d'assembler, avec à chaque fois d'excellents résultats des pièces de géométrie, forme complexe et/ou de grande taille, par exemple avec 0,5 m² de surface à braser ou plus.

Par matériau à base de carbure de silicium, on entend généralement ici tous les matériaux comprenant au moins 50% en masse de carbure de silicium, de préférence au moins 80% en masse de carbure de silicium, de préférence encore 100% en masse de carbure de silicium, dans ce dernier cas le matériau est constitué, composé, uniquement de carbure de silicium.

Les matériaux à base de carbure de silicium peuvent être notamment sous forme de poudre frittée ou infiltrée ou de fibres liées par une matrice céramique.

Les matériaux à base de carbure de silicium peuvent être choisis parmi les carbures de silicium purs tels que le carbure de silicium pur α (SiCα) ou β (SiCβ) et les matériaux composites à base de SiC tels que les composites à fibres et/ou à matrice de carbure de silicium.

Comme exemples de matériaux à base de SiC, on peut citer le carbure de silicium dense pur ou carbure de silicium fritté sans pression (*"PLS-SiC",* à savoir « *PressureLess Sintered SiC* », en anglais) ; le carbure de silicium infiltré Si (appelé SiSiC ou RBSC contenant 5 à 20 % Si) ; le carbure de silicium recristallisé poreux (appelé RSiC) ; le graphite silicium (C-SiC) constitué de graphite et recouvert par une couche de SiC par exemple de 0,1 à 1 mm d'épaisseur; ainsi que les composites SiC/SiC, par exemple, à fibres ou à « Whiskers » ; les composites SiC/SiC à matrice auto-cicatrisante ; les composites C/SiC, par exemple, à fibres ou à « Whiskers » de carbone et à matrice SiC ; et encore les monocristaux de SiC ; et les composites du SiC avec une autre céramique, par exemple, les composites SiC/Si₃N₄ et SiC/TiN.

De préférence, le matériau à base de silicium des substrats, pièces à assembler selon l'invention est constitué à 100% de carbure de silicium, choisi par exemple parmi les nuances de carbure de silicium fritté pur α (SiCα) ou β (SiCβ) ou parmi les composites SiC/SiC avec une matrice en carbure de silicium et des fibres en carbure de silicium comme le composite Cerasep A40C® disponible auprès de la société Snecma Propulsion Solide.

Il a été constaté, de manière surprenante, que le procédé de l'invention permettait un brasage des composites avec d'excellents résultats.

En effet, le procédé selon l'invention peut être réalisé à une température de brasage modérée, voisine de 1100°C, qui n'occasionne pas de dégradation des matériaux composites tels que le Cerasep A40C® ne tolérant pas de températures plus élevées.

Les deux pièces ou plus à assembler peuvent être en un même matériau, à base de carbure de silicium par exemple en PLS (« *Pressureless Sintered* ») -SiC, ou en composite SiC-SiC ou chacune des pièces peut être en un matériau à base de carbure de silicium différent.

Conformément au premier mode de réalisation, on réalise un apport en silicium sur les surfaces à assembler des pièces à assembler et/ou dans des couches de surface comprenant les surfaces à assembler des pièces à assembler.

Ainsi, on pourra revêtir de silicium les surfaces à assembler des (au moins deux) pièces à assembler.

Les surfaces à assembler des pièces à assembler doivent être revêtues de silicium, mais on peut revêtir éventuellement en outre d'autres surfaces des pièces à assembler.

Ce revêtement peut être préparé par un procédé de dépôt chimique en phase vapeur (« *Chemical Vapour Deposition* » ou CVD en anglais), un procédé de dépôt physique en phase vapeur (« *Physical Vapour Deposition* » ou PVD en anglais), un procédé de dépôt physique en phase vapeur par faisceau d'électrons (« *Electron Beam Physical Vapour Deposition* » ou EBPVD), ou par un procédé de dépôt en phase liquide.

Ce revêtement a généralement une épaisseur de 0,5 à 10 µm ; une épaisseur d'environ 1 µm est recommandée.

On peut aussi réaliser l'apport en silicium dans des couches de surface comprenant les surfaces à assembler des pièces à assembler, les couches de surface étant constituées par du SiC enrichi en silicium par rapport à la stoechiométrie ou par du silicium pur.

Par SiC « *enrichi en silicium* » par rapport à la stoechiométrie, on entend généralement que la teneur en silicium est supérieure à 0,5%at. Cette couche de surface a généralement une épaisseur, profondeur de 1 à 150 µm.

Cet apport en silicium peut être réalisé dans des couches de surface comprenant seulement les surfaces à assembler des pièces à assembler, mais cet apport en silicium peut être réalisé dans des couches de surface comprenant outre les surfaces à assembler de chacune des pièces à assembler d'autres surfaces des pièces, voire toutes les surfaces externes des pièces.

Ainsi, dans le cas d'un matériau composite à base de SiC, le procédé d'élaboration du composite est réalisé de façon à ce que la surface du composite et quelques µm en profondeur dans le composite ne soit pas du SiC stoechiométrique mais du SiC enrichi en silicium ou du silicium pur.

Parmi les procédés permettant d'enrichir en silicium la surface d'un matériau composite, on peut citer le procédé d'infiltration en phase vapeur (« *Chemical Vapor Infiltration* » ou CVI en anglais) ou l'infiltration de silicium en phase liquide.

Les pièces dans lesquelles a été réalisé, conformément à l'invention, un apport en silicium sur les surfaces ou dans les couches de surface à assembler peuvent alors être assemblées.

La deuxième étape du procédé selon l'invention consiste généralement à réaliser l'assemblage par brasage proprement dit.

Préalablement à l'assemblage, les deux (ou plus) surfaces des pièces en matériaux à base de SiC à assembler sont généralement dégraissées, nettoyées, dans un solvant organique par exemple du type cétone, ester, éther, alcool, ou un mélange de ceux-ci.

Un solvant préféré est l'acétone ou un mélange acétone-alcool éthylique-éther par exemple dans les proportions 1/3, 1/3, 1/3 ; on peut aussi nettoyer les pièces successivement avec plusieurs solvants différents, par exemple avec de l'acétone puis de l'éthanol. Les pièces sont ensuite séchées.

La suspension, pâte de la composition de brasure préparée comme cela a été décrit précédemment, est étalée, enduite, appliquée, de préférence de façon homogène, uniforme, par exemple avec une brosse, une spatule, un pinceau, ou à l'aide d'une seringue éventuellement fixée à un système robotisé, ou à l'aide de tout autre moyen permettant de déposer une couche de pâte de brasure uniforme, sur la surface d'au moins une des pièces en matériau à base de carbure de silicium à assembler.

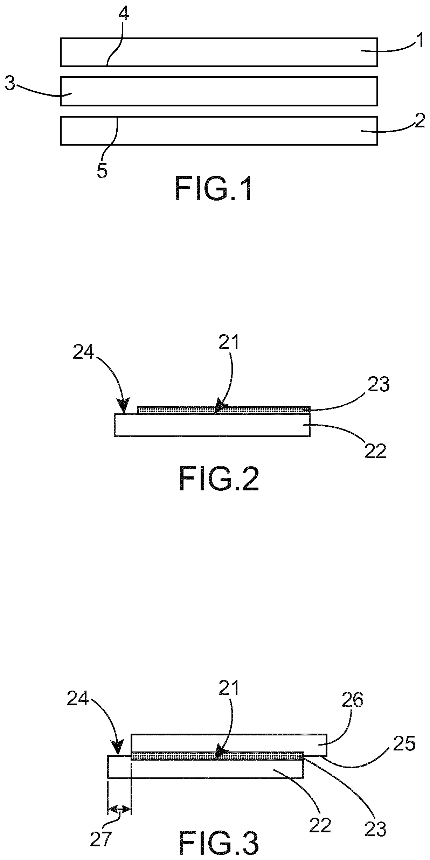

Puis, on met en contact la ou les surface(s) enduite(s) de pâte des deux pièces (1, 2) à assembler. Cette configuration de brasage, illustrée sur la Figure 1 est appelée « configuration sandwich » car la pâte de la composition de brasure (3) est placée directement entre les surfaces (4, 5) des pièces à assembler.

La configuration « sandwich » s'applique aussi bien pour des joints « fins », c'est-à-dire d'une épaisseur inférieure à 500 micromètres, que pour des joints « épais », c'est-à-dire d'une épaisseur supérieure ou égale à 500 micromètres.

La quantité de pâte, suspension de composition de brasure à mettre en oeuvre dans cette configuration est généralement de 10 mg/cm² à 100 mg/cm², par exemple de 50 mg/cm². Cette quantité dépend bien sûr de l'épaisseur de joint.

Dans une forme de réalisation du brasage en « configuration sandwich », les pièces à assembler, telles que des plaques, sont décalées.

Ainsi, on commence par recouvrir de manière homogène une surface à assembler (21) d'une première plaque à assembler (22) avec de la pâte de brasure (23) (Figure 2), en laissant un espace libre (24) exempt de pate, par exemple sous la forme d'une bande le long d'un des bords de la plaque (22).

Ensuite, on met en contact la surface à assembler (25) d'une deuxième plaque à assembler (26) avec la pâte déposée sur la surface à assembler (21) de la première plaque (Figure 3).

Du fait de la présence d'un espace libre non recouvert de pâte sur la surface de la première plaque, les deux plaques en composite sont décalées (27) tandis que la pâte de composition de brasure est intercalée entre les surfaces à assembler des plaques (22, 26).

Ou bien, on rapproche les surfaces à assembler des pièces à assembler de façon à laisser entre elles un intervalle, généralement de 1 à 200 µm, qui sera comblé par effet de capillarité par la composition de brasure, cette dernière étant disposée à proximité de l'intervalle à combler dans un espace ou réservoir ménagé à cet effet, ledit réservoir pouvant avoir des dimensions millimétriques conformément aux connaissances de l'homme du métier en ce domaine.

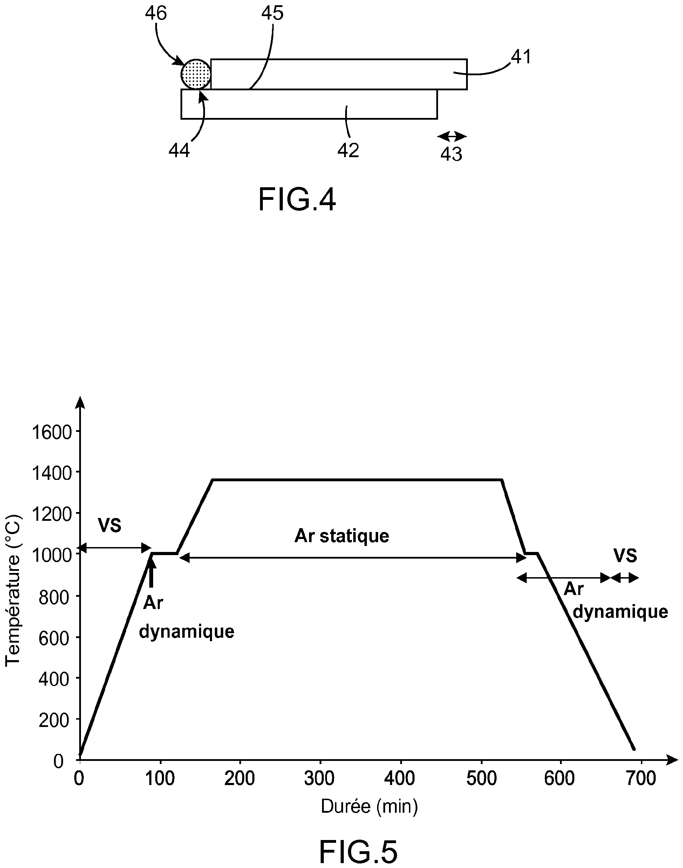

Ainsi, comme cela est représenté sur la Figure 4, les surfaces à assembler des pièces à assembler, par exemple sous la forme de plaques (41, 42), peuvent être mises en contact, sans avoir mis de composition de brasure entre elles et en laissant un intervalle entre elles. En outre, on fait en sorte qu'il existe un écart, décalage (43) entre les pièces, généralement de quelques mm, par exemple de 1 mm, 2 mm, à 10 mm de façon à créer une surface libre (44) susceptible de recevoir la suspension ou pâte à proximité du joint (45) formé par les surfaces à assembler des pièces à assembler, puis on dépose la suspension ou pâte de composition de brasure par exemple sous la forme d'un cordon de brasure (46) sur cette surface à proximité du joint, au voisinage du joint, ou au bord du joint. Pendant le cycle thermique de brasage, la composition de brasure liquide s'infiltre dans le joint.

Cette configuration de brasage est appelée « configuration capillaire ». Avec les compositions de brasure selon l'invention, il est possible de réaliser un tel brasage capillaire, à savoir une infiltration de la brasure dans le joint de brasage, sans disposer directement la composition de brasure entre les pièces à assembler comme dans le cas de la « configuration sandwich ».

Dans le cas où l'on choisit de réaliser le brasage en configuration capillaire, l'addition d'un composé tel que CaF₂ ou B₂O₃ peut accroître la vitesse de remplissage des joints.

La quantité de pâte, suspension de composition de brasure à mettre en oeuvre dans cette configuration capillaire est généralement de 10 mg/cm² à 50 mg/cm², par exemple de 20 mg/cm².

Les pièces prêtes à être brasées sont alors disposées dans un dispositif de chauffage tel qu'un four ou soumises à un chauffage par tout autre moyen adéquat.

Le four est un four fonctionnant sous air généralement un four avec des réfractaires en alumine.

Conformément à l'invention, le brasage est réalisé sous une atmosphère oxydante telle qu'une atmosphère contenant de l'oxygène, par exemple sous une atmosphère d'air, et le dispositif de chauffage tel qu'un four, par exemple, est sous une atmosphère oxydante telle qu'une atmosphère contenant de l'oxygène, par exemple sous une atmosphère d'air.

Les pièces à assembler sont soumises par exemple dans le four à un cycle thermique de brasage sous une atmosphère oxydante, notamment sous air.

Ainsi l'ensemble formé par les pièces et la composition de brasure peut-il être amené à la température de brasage (palier de brasage) en observant une montée en température de préférence « lente », avec une ou plusieurs rampe(s) de températures depuis la température ambiante.

Cette montée en température peut être une montée en température lente par exemple avec une rampe de températures à raison de 400°C/minute ou une montée en température rapide par exemple avec une rampe de températures à raison de 50°C/minute.

Lorsque l'on réalise une montée en température rapide, la pièce est introduite dans un four déjà chaud, préchauffé.

Le palier de brasage, est effectué à une température, qui est la température de brasage. Celle-ci est en général supérieure d'au moins 20°C à la température de fusion, ou température de liquidus, de la composition de brasure choisie.

Selon l'invention, le verre peut permettre l'assemblage avec un palier légèrement en-dessous du point de fusion, domaine où le verre est visqueux et donc la température de brasage peut aller de Tfusion (100°C) à Tfusion + 20°C voire + 50°C voire 50°C.

La température de brasage est en outre généralement choisie en fonction de la température que peuvent supporter les pièces, et en fonction de la température qu'il est possible d'atteindre avec le dispositif de chauffage.

La température de brasage recommandée selon l'invention est donc, par exemple, de 1050°C à 1350°C, de préférence de 1100°C à 1200°C.

Une telle température de brasage permet, une utilisation de l'assemblage, notamment, sous air par exemple jusqu'à 850°C et même jusqu'à 1000°C, voire 1200°C ou 1250°C et pour certaines compositions de brasure et certains matériaux à base SiC.

La durée du brasage, c'est-à-dire le cycle thermique de réalisation de l'assemblage est, selon l'invention, généralement de courte durée.

La durée du palier de brasage est généralement de 10 à 120 minutes.

La durée du palier de brasage dépend de la température de brasage, et elle est typiquement de 120 minutes pour une température de 1100°C et elle peut être diminuée pour des températures de brasage supérieures.

Cette durée peut être également un peu augmentée pour de très grandes pièces avec de grandes surfaces à braser, à savoir typiquement au moins 50 x 50 mm². Dans ce cas, la durée du palier de brasage peut aller jusqu'à 200 minutes, voire 240 minutes.

Il est également possible d'introduire directement, « rapidement » les pièces à assembler, prêtes à être brasées, dans un dispositif tel qu'un four déjà porté à la température du palier de brasage, généralement de 1050°C à 1350°C afin de réduire la durée du cycle thermique.

En fin de cycle de brasage, suite au palier de brasage, on refroidit l'assemblage jusqu'à la température ambiante à raison par exemple de 5°C à 6°C par minute. Ce refroidissement est généralement un refroidissement « naturel ».

Pendant le refroidissement, la brasure se solidifie et l'assemblage des pièces en matériau à base de carbure de silicium est effectif aussi bien dans le cas où l'on a utilisé une configuration « sandwich » que dans le cas où l'on a utilisé une configuration « capillaire ».

De manière surprenante, les assemblages de pièces en matériaux à base de carbure de silicium brasés sous air à température modérée (par exemple à 1100°C), conformément au premier mode de réalisation du procédé selon l'invention dans lequel on réalise un apport en silicium sur les surfaces à assembler des pièces et/ou dans les couches de surface comprenant les surfaces à assembler des pièces, présentent un comportement mécanique bien meilleur que les assemblages brasés sous air mais sans réaliser d'apport en silicium, comme le démontrent les exemples fournis ci-après dans la présente (Exemples 2, 4, et 5).

Selon le second mode de réalisation du procédé selon l'invention, l'apport en silicium est réalisé dans la composition de brasure.

La composition de brasure peut ainsi être enrichie en silicium non oxydé dissous (en solution) jusqu'à la concentration correspondant à la saturation de la composition de brasure en silicium non oxydé dissous.

De préférence, la composition de brasure est enrichie en silicium non oxydé dissous à une concentration qui est proche (à savoir à 1% à 2% massique) de la concentration correspondant à la saturation de la composition de brasure en silicium non oxydé mais sans toutefois atteindre cette dernière, ou qui est égale à la concentration correspondant à la saturation de la composition de brasure en silicium non oxydé dissous.

Afin d'obtenir cette saturation en silicium, on peut par exemple faire fondre le verre obtenu comme décrit plus haut (par fusion des constituants et refroidissement) à 1360°C sous argon en présence de silicium pendant 6 heures.

On peut procéder de différentes façons pour réaliser cette fusion du verre sous argon en présence de silicium conduisant à une saturation du verre:
> soit le verre est placé dans un creuset en silicium ou revêtu de silicium. L'ensemble est placé dans un four sous argon et maintenu à 1360°C pendant 6 heures.
> soit le verre est placé dans un creuset non réactif ou très peu réactif avec le verre (par exemple du carbure de silicium ou du graphite) et une tige en silicium est plongée dans le verre liquide maintenu à 1360°C pendant 6 heures sous argon.
   Dans les deux cas, le verre peut être coulé hors de son creuset pour récupérer le verre sans casse du creuset. Si le verre solidifie dans son creuset, ce dernier risque d'être cassé pour récupérer le verre saturé en silicium.
> soit le verre est placé sur des plaques en silicium. L'ensemble est placé dans un four sous argon et maintenu à 1360°C pendant 6 heures. Le verre peut être coulé à l'état liquide pour être récupéré.

Le verre saturé en silicium est broyé dans un mortier ou tout autre dispositif adéquat pour obtenir une poudre de granulométrie adéquate dont les grains ont, par exemple, un diamètre de 10 à 250 µm.

Ensuite, toutes les étapes du procédé selon l'invention dans ce second mode de réalisation sont ensuite identiques aux étapes du premier mode de réalisation décrit plus haut.

Toutefois dans ce second mode de réalisation, on ne réalise généralement pas d'apport en silicium sur les surfaces à assembler des pièces et/ou dans les couches de surface comprenant les surfaces à assembler des pièces.

De manière surprenante, les assemblages de pièces en matériaux à base de carbure de silicium brasés sous air à température modérée (par exemple voisine de 1100°C) conformément au second mode de réalisation du procédé selon l'invention dans lequel on réalise un apport en silicium dans la composition de brasure, présentent un comportement mécanique bien meilleur que les assemblages brasés sous air mais sans réaliser d'apport en silicium, comme le démontrent les exemples fournis ci-après dans la présente (Exemple 3).

Les assemblages de pièces en carbure de silicium comportant des joints préparés par le procédé selon l'invention permettent de réaliser des structures, appareils, composants de formes complexes ayant des températures d'utilisation élevées pouvant aller généralement jusqu'à 1000°C voire 1250°C avec une grande précision.

On sait en effet que les propriétés mécaniques du carbure de silicium :
- grande dureté ;
- bas coefficient de dilatation ;
- résistance à la rupture élevée ;
- bonne résistance au choc thermique ;
- ainsi que sa très bonne conductivité en font un matériau incontournable pour les présentes et les futures applications industrielles à haute température.

De plus, le SiC présente une très bonne résistance chimique aux divers acides, y compris l'acide fluorhydrique et une très bonne résistance à l'oxydation sous air.

En d'autres termes, le procédé selon l'invention peut notamment s'appliquer à la fabrication de tout dispositif, appareil, structure, composant, nécessitant un assemblage moyennement réfractaire entre au moins deux substrats, pièces à base de carbure de silicium en garantissant à la fois une bonne tenue mécanique et une étanchéité satisfaisante au niveau de l'assemblage.

Ce type de dispositif, appareil, structure, composant peut répondre à des besoins dans différents domaines :
- le domaine du génie thermique, notamment pour concevoir des échangeurs de chaleur très performants car le carbure de silicium présente une bonne conductivité thermique et une bonne tenue aux hautes températures dans des environnements extrêmes.
- le domaine du génie mécanique pour réaliser dans des dispositifs embarqués des composants légers, rigides, réfractaires, résistant à l'abrasion et résistants aux sollicitations mécaniques.
- le domaine du génie chimique car le carbure de silicium est résistant à de nombreux produits chimiques corrosifs par exemple comme les bases et les acides forts.
- le domaine du génie nucléaire pour la réalisation du gainage des combustibles.
- les domaines de l'optique spatiale (miroir de télescope en SiC) et de l'aéronautique (pièce en composite SiC/SiC).
- l'électronique de puissance qui utilise le SiC ou le silicium.

L'invention va maintenant être décrite au moyen des exemples suivants donnés bien entendu à titre illustratif et non limitatif.

### Exemples :

### Exemple 1 :

Cet exemple décrit la préparation d'une composition, alliage de brasure constitué par un mélange d'oxydes de composition 62% en masse de SiO₂-15% en masse de Al₂O₃- et 23% en masse de CaO, et la saturation en silicium d'une partie de ce mélange.

### a) Préparation de la composition de brasure.

La brasure de composition visée 62% en masse de SiO₂-15% en masse de Al₂O₃-23% en masse de CaO est préparée à partir de poudre de SiO₂, de mullite (composé défini 3Al₂O₃-2SiO₂)et du composé CaO-SiO₂.

Ces poudres sont pesées en respectant les proportions, puis mélangées et broyées dans un mortier. Le mélange de poudre est ensuite soumis à un palier de 4 heures sous air à 1590°C. Après refroidissement, on obtient un verre. Les analyses faites à la microsonde X indiquent que le mélange est homogène et que la composition en masse est 61,2% SiO₂-15,0% Al₂O₃-23,4% CaO.

Le verre obtenu est récupéré puis concassé dans un mortier.

Une partie du verre est conservée pour les essais sans saturation en silicium du verre, on le note Verre n°1, et le reste du verre est saturé en silicium selon le procédé décrit ci-après, on le note Verre n°2.

### b) Saturation du mélange d'oxydes en silicium.

Pour saturer le mélange d'oxydes en silicium, on le place dans un creuset en silicium.

L'ensemble constitué par le creuset en silicium et le mélange d'oxydes est placé dans un four métallique où il subit le cycle thermique représenté sur la Figure 5.

Ce cycle thermique comprend les étapes suivantes :
- Montée en température depuis la température ambiante jusqu'à 1000 °C, en 90 minutes, sous vide secondaire ;
- Palier à 1000 °C, pendant 30 minutes, sous Argon dynamique ;
- Montée en température depuis 1000°C jusqu'à 1360 °C, en 45 minutes sous Argon statique ;
- Palier à 1360°C, pendant 6 heures (360 minutes), sous Argon statique ;
- Descente en température depuis 1360°C jusqu'à 1000°C, en 30 minutes, sous argon statique ;
- Palier à 1000 °C, pendant 15 minutes, sous Argon dynamique ;
- Descente en température depuis 1000°C jusqu'à la température ambiante, en 120 minutes sous argon dynamique pendant 100 minutes, puis sous vide secondaire.

A l'issue du cycle, on récupère un verre saturé en silicium.

L'analyse par microsondes montre que la teneur en silicium dissous dans la brasure est de 1% en masse.

### Exemple 2 :

Cet exemple est un exemple comparatif qui décrit la préparation de liaisons, assemblages Composite/Composite entre deux pièces en matériau composite CeraSep A40C® en mettant en oeuvre un procédé de brasage (brasage en configuration sandwich) qui utilise une composition de brasure constituée de 62% en masse de SiO₂ - 15% en masse de Al₂O₃ et 23% en masse de CaO.

On prépare d'une part un assemblage entre deux pièces en un matériau composite CeraSep C® appartenant à un premier lot dénommé lot A, et d'autre part un assemblage entre deux pièces en un matériau composite Cerasep A40C® appartenant à un deuxième lot dénommé lot B.

On caractérise et on compare ensuite les interfaces des assemblages obtenus respectivement entre les deux pièces en matériau composite appartenant au lot A et les deux pièces en matériau composite appartenant au lot B.

### a) Les matériaux composites

Le matériau composite Cerasep A40C® est un composite SiC/SiC avec une matrice en SiC et des fibres en SiC. Un tel matériau est disponible auprès de la société Snecma Propulsion Solide (Groupe Safran). Deux lots différents, dénommés lot A et lot B ont été élaborés et présentent des différences en termes de chimie de surface.
- Le lot A est la référence en termes de stoechiométrie, il est revêtu d'un dépôt de SiC stoechiométrique (appelé aussi « *seal coat* »).
- Le lot B a été modifié et le dépôt de SiC n'est pas stoechiométrique mais enrichi en Silicium, de composition 75 at. % Si - 25 at. % C, l'épaisseur du dépôt est de l'ordre de 150 µm.

### b) Préparation de la composition de brasure et des pièces à assembler.

Le verre est élaboré selon la procédure décrite dans l'exemple 1.

C'est selon la notation précisée dans l'exemple 1, le verre n°1, non saturé en silicium, qui est utilisé.

Ensuite, il est récupéré, puis broyé dans un mortier. Puis il est mélangé à un cément organique NICROBRAZ® à la fois visqueux et collant afin d'obtenir une pâte facile à étaler.

Les pièces en matériau composite sont des plaques de dimensions 25 x 25 mm² et d'épaisseur 1,5.

Les deux surfaces en matériau composite à assembler sont dégraissées dans un solvant organique, puis séchées.

La pâte est étalée de façon homogène sur la surface de l'un des substrats, pièces en matériau composite à assembler.

La quantité mise en place sur les 2 cm² de surface à assembler lors de cet essai est de l'ordre de 50 mg/cm².

Puis, les substrats, pièces sont mis en contact (cette configuration est appelée configuration sandwich).

### c) Brasage.

Les pièces, mises en contact et ainsi prêtes à être brasées sont placées dans un four et soumises à un cycle thermique de brasage sous air.

Le cycle comprend une rampe de montée en température depuis la température ambiante jusqu'à 1100°C à raison de 400°C/h, puis un palier de 120 minutes à 1100 °C suivi d'un refroidissement naturel.

### d) Caractérisation des interfaces matériau composite/verre.

Les interfaces des assemblages obtenus sont caractérisées en les observant au microscope électronique à balayage (MEB).

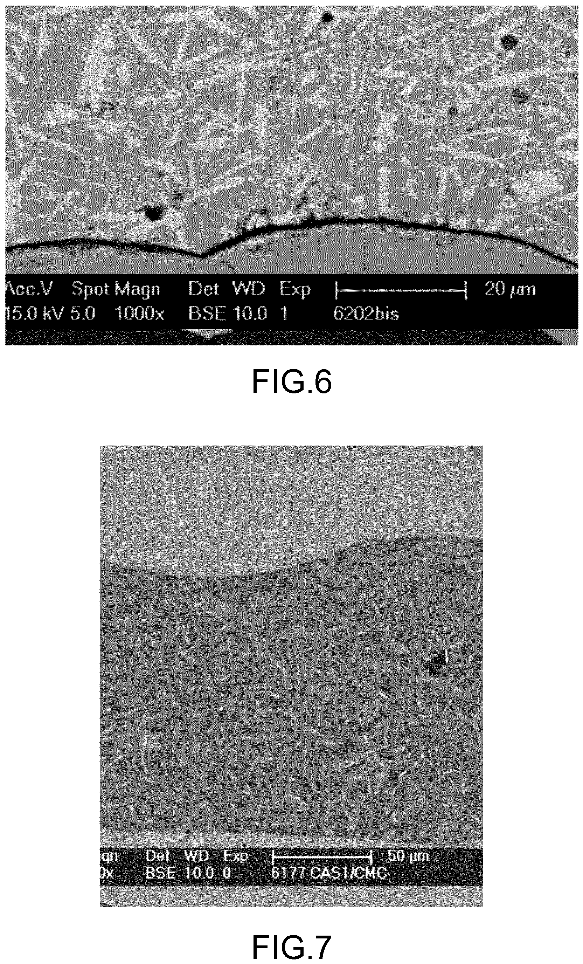

L'assemblage réalisé avec le lot A conduit à une interface discontinue entre le verre et le composite, ce qui est caractéristique d'un manque d'adhérence (Figure 6). En revanche, avec le lot B, une interface continue est observée (Figure 7).

L'enrichissement en silicium, conformément à l'invention, de la surface du lot B a permis une meilleure adhérence.

### Exemple 3 :

Cet exemple décrit la préparation de liaisons, assemblages entre deux pièces en matériau composite CeraSep A40C®, et entre deux pièces en carbure de silicium SiC α pur fritté, en mettant en oeuvre un procédé de brasage (brasage en configuration sandwich) qui utilise une composition de brasure constituée de 62% en masse de SiO₂ - 15% en masse de Al₂O₃ et 23% en masse de CaO non saturée en silicium ou bien la même composition de brasure mais saturée en silicium.

Cet exemple décrit en outre des essais, tests mécaniques réalisés sur ces assemblages afin d'en comparer le comportement mécanique.

### a) Le matériau composite, et le SiC α pur fritté.

Le matériau composite sélectionné dans cet exemple 3 est le composite Cerasep A40C® (déjà décrit plus haut dans l'exemple 2, paragraphe a)).

Le lot sélectionné dans cet exemple 3 est le lot A, c'est-à-dire la référence en termes de stoechiométrie (SiC stoechiométrique).

Le SiC α pur fritté est le SiC alpha (Hexoloy® de St Gobain).

### b) Préparation de la composition de brasure et des pièces à assembler.

Le verre n°1 non saturé en silicium, et le verre n°2 saturé en silicium ont été élaborés comme décrit dans l'exemple 1.

Chacun des verres est récupéré, puis broyé dans un mortier. Puis il est mélangé comme dans l'exemple 2, à un cément organique NICROBRAZ® à la fois visqueux et collant afin d'obtenir une pâte facile à étaler.

Les pièces en composite et en SiC fritté sont des plaques de dimensions 20 x 10 mm² et d'épaisseur 1,5 mm.

Les pièces sont nettoyées à l'acétone, puis à l'éthanol et enfin séchées.

La pâte est étalée de façon homogène sur la surface de l'un des substrats, pièces à assembler en laissant libre une bande d'environ 2 mm depuis le bord de la pièce (dans le sens de la largeur = 10 mm) comme cela est indiqué sur la Figure 2. La quantité déposée est :
- comprise entre 30 et 50 mg pour la plaque en SiC fritté ;
- comprise entre 90 et 110 mg pour la plaque en matériau composite. En effet, le joint étant plus épais du fait de l'état de surface du matériau composite, la quantité de brasure nécessaire pour remplir le joint est plus importante que pour le SiC fritté.

Puis les substrats, pièces sont mis en contact (Figure 3) avec un décalage de 2 mm (cette configuration est appelée configuration sandwich).

### c) Brasage.

Les pièces mises en contact et prêtes à être brasées sont placées dans un four et soumises à un cycle thermique de brasage sous air.

Le cycle comprend une rampe de montée en température depuis la température ambiante jusqu'à 1100°C à raison de 400°C/h, puis un palier de 120 minutes à 1100 °C suivi d'un refroidissement naturel.

Les assemblages suivants, éprouvettes suivantes ont ainsi été fabriqués:
- 5 éprouvettes en SiC assemblées avec le verre n°1 non saturé en Si.
- 2 éprouvettes en SiC assemblées avec le verre n°2 saturé en Si.
- 2 éprouvettes en composite avec le verre n°1 non saturé en Si.
- 2 éprouvettes en composite avec le verre n°2 saturé en Si.

### d) Essais mécaniques.

Les essais mécaniques sont réalisés avec les éprouvettes d'essais mécaniques préparées en c) par brasage de 2 pièces de dimensions chacune 20x10x1,5 mm³ (l'épaisseur de l'éprouvette brasée est donc 1,5 + 1,5 = 3 mm) (81, 82).

En effet, la mécanique des céramiques étant statistique, on prépare en vue des essais plus d'une éprouvette mais avec le même procédé de fabrication.

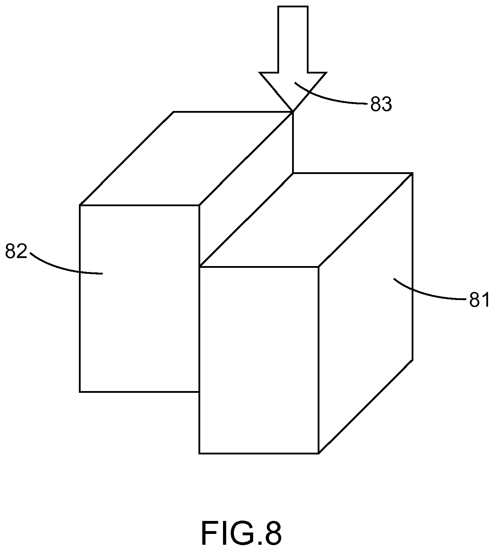

Les éprouvettes sont schématisées sur la Figure 8. Elles sont fixées dans un montage et sollicitées en cisaillement lors d'un test de compression / cisaillement (83) à température ambiante.

Il est à noter que ce test ne permet pas de garantir du cisaillement pur mais c'est le mode préférentiel. Ce test permet cependant de comparer les assemblages entre eux.

### • Résultats des essais mécaniques :

Les moyennes des contraintes à rupture déterminées pour ces éprouvettes sont données dans le tableau 1 ainsi que le type de rupture : adhésive (à l'interface), cohésive (dans le substrat SiC ou dans le matériau composite ou dans le « *seal coat* » du matériau composite), ou mixte (intermédiaire entre les 2 modes).

**Tableau 1. Contrainte à rupture et mode de rupture pour les éprouvettes testées en compression/cisaillement.**

| **Verre** | **SiC fritté** | | **Composite Cerasep A40C®** | |
|---|---|---|---|---|
| | Contrainte à rupture (MPa) | Type de rupture | Contrainte à rupture (MPa) | Type de rupture |
| Verre n°1 non saturé | 6 | adhésive | 5 | adhésive |
| Verre n°2 saturé | 14 | mixte | 10 | Cohésif, Arrachement du seal coat du composite |

Notons que l'enrichissement en silicium du verre fait passer d'un mode de rupture adhésif (rupture à l'interface) à un mode de rupture mixte (rupture dans le substrat et dans le joint) ou cohésif (rupture dans le substrat) : c'est le cas du composite avec arrachement du « *seal coat* » de SiC.

### Exemple 4 :

Cet exemple décrit la préparation de liaisons, assemblages entre deux pièces en matériau composite CeraSep A40C® (lot B), en mettant en oeuvre le procédé de brasage selon l'invention -le brasage étant réalisé en « configuration sandwich »- et en utilisant une composition de brasure constituée de 62% en masse de SiO₂ - 15% en masse de Al₂O₃ et 23% en masse de CaO, non saturée en silicium.

Cet exemple décrit en outre des essais, tests mécaniques réalisés sur ces assemblages afin d'en étudier le comportement mécanique.

### a) Le matériau composite.

Le matériau composite sélectionné dans cet exemple 4 est le composite Cerasep A40C® (déjà décrit plus haut dans l'exemple 2, paragraphe a)).

Le lot sélectionné dans cet exemple 4 est le lot B, c'est-à-dire que le dépôt de SIC du « *seal coat* » n'est pas stoechiométrique mais enrichi en silicium. Le dépôt est de composition 75 at. % Si - 25 at. % C, et l'épaisseur du dépôt est de l'ordre de 150 µm.

Ce dépôt de SiC enrichi en silicium a été réalisé par « CVI » pendant la phase d'élaboration du composite.

### b) Préparation de la composition de brasure et des pièces à assembler.

Le verre n°1 non saturé en silicium, a été élaboré comme décrit dans l'exemple 1.

Le verre est récupéré, puis broyé dans un mortier. Puis il est mélangé comme dans l'exemple 2, à un cément organique NICROBRAZ® à la fois visqueux et collant afin d'obtenir une pâte facile à étaler.

Les pièces en composite et en SiC fritté sont des plaques de dimensions 20 x 10 mm² et d'épaisseur 1,5 mm.

Les pièces sont nettoyées à l'acétone, puis à l'éthanol et enfin séchées.

La pâte est étalée de façon homogène sur la surface de l'un des substrats, pièces à assembler en laissant libre une bande d'environ 2 mm depuis le bord de la pièce (dans le sens de la largeur) comme cela est indiqué sur la figure 2. La quantité déposée est comprise entre 90 et 110 mg pour la plaque en matériau composite.

Puis les substrats, pièces sont mis en contact avec un décalage de 2 mm (cette configuration est appelée configuration sandwich : figure 3).

### c) Brasage.

Les pièces mises en contact et prêtes à être brasées sont placées dans un four et soumises à un cycle thermique de brasage sous air.

Le cycle comprend une rampe de montée en température depuis la température ambiante jusqu'à 1100°C à raison de 400°C/h, puis un palier de 120 minutes à 1100°C suivi d'un refroidissement naturel.

Trois assemblages, éprouvettes ont ainsi été fabriqués:

### d) Essais mécaniques.

Les essais mécaniques sont réalisés avec les éprouvettes d'essais mécaniques préparées en c) par brasage de 2 pièces de dimensions chacune 20x10x1,5 mm³ (l'épaisseur de l'éprouvette brasée est donc 1,5 + 1,5 = 3 mm) (81, 82).

Les éprouvettes sont schématisées sur la Figure 8. Elles sont fixées dans un montage et sollicitées en cisaillement lors d'un test de compression / cisaillement (83) à température ambiante.

### • Résultats des essais mécaniques :

Les moyennes des contraintes à rupture déterminées pour ces trois éprouvettes sont de 12 MPa.

Le type de rupture est mixte avec rupture dans le « *seal coat* » et dans le joint.

Notons que l'enrichissement en silicium de la surface du composite fait passer d'un mode de rupture adhésif (rupture à l'interface) à un mode de rupture mixte (rupture dans le « *seal coat* » et dans le joint).

### Exemple 5 :

Cet exemple décrit la préparation de liaisons, assemblages, entre deux pièces en matériau composite CeraSep A40C® (lot A) revêtu d'un dépôt de silicium d'une épaisseur de 1 µm, et entre deux pièces en matériau composite CeraSep A40C® (lot A), en mettant en oeuvre un procédé de brasage (brasage en configuration sandwich) qui utilise une composition de brasure constituée de 62% en masse de SiO₂ - 15% en masse de Al₂O₃ et 23% en masse de CaO non saturée en silicium.

Cet exemple décrit en outre des essais, tests mécaniques réalisés sur ces assemblages afin d'en étudier le comportement mécanique.

### a) Le matériau composite.

Le matériau composite est le Cerasep A40® revêtu de silicium.

Le matériau composite sélectionné dans cet exemple 5 est le composite Cerasep A40C® (déjà décrit plus haut dans l'exemple 2, paragraphe a)).

Le lot sélectionné dans cet exemple 5 est le lot A, c'est-à-dire la référence en termes de stoechiométrie (SiC stoechiométrique).

Ce matériau composite a été revêtu d'un dépôt de silicium d'une épaisseur de 1 µm par le procédé de dépôt physique en phase vapeur par faisceau d'électrons (« Electron Beam Physical Vapor Déposition » en anglais).

### b) Préparation de la composition de brasure et des pièces à assembler.

La brasure de composition visée 62% en masse de SiO₂-15% en masse de Al₂O₃-23% en masse de CaO a été préparée à partir de poudre de SiO₂ (1,412 g), de mullite (composé défini 3Al₂O₃-2SiO₂) (0,940 g), du composé CaO-SiO₂ (2,142 g, et de poudre de B₂O₃ (0,500 g).

Ces poudres sont pesées en respectant les proportions, puis mélangées et broyées dans un mortier.

Le mélange de poudre est ensuite soumis à un palier de 4 heures sous air à 1590°C. Après refroidissement, on obtient le verre.

Le verre obtenu est récupéré puis concassé dans un mortier.

Le verre ainsi élaboré est ensuite mélangé comme dans l'exemple 2, à un cément organique NICROBRAZ® à la fois visqueux et collant afin d'obtenir une pâte facile à étaler.

Les pièces en composite sont des plaques de dimensions 20 x 10 mm² et d'épaisseur 1,5 mm. Elles ont été revêtues d'une couche de 1 µm de silicium par le procédé de dépôt physique en phase vapeur par faisceau d'électrons (« Electron Beam Physical Vapor Déposition » en anglais).

Les plaques en matériau composite sont nettoyées à l'acétone, puis à l'éthanol et enfin séchées.

La pâte est étalée de façon homogène sur la surface de l'un des substrats, pièces à assembler en laissant libre une bande d'environ 2 mm depuis le bord de la pièce (dans le sens de la largeur) comme cela est indiqué sur la figure 2.

La quantité déposée est comprise entre 90 et 110 mg.

Puis les substrats, pièces sont mis en contact avec un décalage de 2 mm (cette configuration est appelée configuration sandwich - Figure 3).

### c) Brasage.

Les pièces mises en contact et prêtes à être brasées sont placées dans un four et soumises à un cycle thermique de brasage sous air.

Le cycle comprend une rampe de montée en température depuis la température ambiante jusqu'à 1100°C à raison de 400°C/h, puis un palier de 120 minutes à 1100°C suivi d'un refroidissement naturel.

Deux éprouvettes ont ainsi été fabriquées.
d) Deux autres éprouvettes ont été fabriquées exactement de la même manière que dans les paragraphes a) à c) de l'exemple 5 à la seule différence que les pièces, substrats sont en matériau composite Cerasep A40© mais sans revêtement de silicium.

### e) Essais mécaniques.

Les essais mécaniques sont réalisés avec les éprouvettes d'essais mécaniques préparées en c) et en d) par brasage de 2 pièces de dimensions chacune 20x10x1,5 mm³ (l'épaisseur de l'éprouvette brasée est donc 1,5 + 1,5 = 3 mm) (81, 82).

Les éprouvettes sont schématisées sur la Figure 8. Elles sont fixées dans un montage et sollicitées en cisaillement lors d'un test de compression / cisaillement (83) à température ambiante.

### • Résultats des essais mécaniques :

Les contraintes à rupture déterminées pour ces 4 éprouvettes sont données dans le tableau 2 ainsi que le type de rupture.

**Tableau 2. Contrainte à rupture et mode de rupture pour les éprouvettes testées en compression / cisaillement dans le cas du composite CeraSep A40C® avec et sans revêtement de Si.**

| **Verre** | **Composite Cerasep A40C® sans revêtement de Si** | | **Composite Cerasep A40C® avec revêtement de Si** | |
|---|---|---|---|---|
| | Contrainte à rupture (MPa) | Type de rupture | Contrainte à rupture (MPa) | Type de rupture |
| Verre non saturé | 1-4 | adhésive | 13-19 | Cohésif, arrachement du seal coat |

Notons que l'enrichissement en silicium de la surface du matériau composite fait passer d'un mode de rupture adhésif (rupture à l'interface) à un mode de rupture cohésif (rupture dans le substrat) : c'est le cas du matériau composite avec arrachement du « *seal coat* » de SiC.

### RÉFÉRENCES

[1] Hanson W.B., Fernie J.A., Ironside K.I., Ormston D.R., Knowles K.M., Active metal brazing : the role of the braze alloy, Proceedings from materials solutions '99 on joining of advanced and specialty materials, p. 53, 1999.
[2] Fernie J.A., Hanson W.B., Ormston D.R., Knowles K.M., Ceramic reinforced Metal braze alloys for joining silicon carbide, British ceramic proceedings, n°60, p. 317, 1999.
[3] Prakash P., Mohandas T., Dharma Raju P., Microstructural characterisation of SiC ceramic and SiC-metal active metal brazed joints, Scripta materialia 52, p. 1169, 2005.
[4] Gasse A., Coing-Boyat G., Bourgeois G., *Method using a thickjoint for joining parts in SiC-based materials by refractory brazing and refractory thick joint thus obtained,* brevet US-A-5,975,407, 1999.
[5] Montgomery F.C., Streckert H.H., *Braze for Silicon Carbide bodies,* brevet US-A-5,447,683, 1995
[6] Gasse A., *Method for assembling parts made of materials based on SiC by non-reactive refractory brazing, brazing composition, and joint and assembly obtained by said method,* US-A1-2003/0038166.
[7] Lemoine P., Ferraris M., Salvo M, Appendino Montorsi M., Vitreous Joining Process of SiCf / SiC Composites, Journal of the European Ceramic Society 22, p. 2343, 2002.
[8] Ferraris M., Salvo M., Isola C., Appendino Montorsi M., Kohyama A., Glass-ceramic joining and coating of SiC / SiC for fusion applications, Journal of Nuclear Materials 258-263, p. 1546, 1998.
[9] Katoh Y., Kotani M., Kohyama A., Montorsi M., Salvo. M, Ferraris M., Microstructure and mechanical properties of low-activation glass-ceramic joining and coating for SiC/SiC composites, Journal of Nuclear Materials 283-287, p. 1262, 2000.
[10] Drouet C., Minjolle L., *Matériaux céramiques vitreux, procédé de fabrication de tels matériaux et application de ces derniers au collage de pièces céramiques,* FR-A-2 538 370, 1982.
[11] Perham T.J., De Jonghe L.C., MoberlyChan W.J., Joining of silicon carbide with a cordierite glass-ceramic, Journal of the European Ceramic Society 82, p. 297, 1999.
[12] Tamari N., Honda M., Ebata Y., Kinoshita M., Joining of silicon carbide with Si3N4-Y2O3-La2O3-MgO Mixture, Yogyo-Kyokai-Shi 94 [10], p. 1087, 1986
[13] Lee H.L., Nam S.W., Hahn B.S., Joining of silicon carbide using MgO-Al2O3-SiO2 filler, Journal of Materials Science 33, p. 5007, 1998.
[14] Lippmann W., Knorr J., Wolf R., Rasper R., Exner H., Reinecke A.M., Nieher M. , Schreiber R., Laser Joining of silicon - a new technology for ultra-high temperature, Nuclear Engineering and Design 33, p. 5007, 1998.
[15] Knorr J., Lippmann W., Wolf R., Exner H., Reinecke A-M., *Method for producing by laser gastight and high-temperature resistant connections of shaped parts made of non-oxidic ceramic,* US-A1-2005/0167409.
[16] Mailliart O., Chaumat.V., Hodaj F., *Procédé d'assemblage moyennement réfractaire de pièces en matériaux à base de SiC par brasage non réactif sous atmosphère oxydante, composition de brasure, et joint et assemblage obtenus par ce procédé,* FR-A1-2935376.

## Revendications

1. Procédé d'assemblage d'au moins deux pièces (1, 2, 22, 26, 41, 42, 81, 82) en matériaux à base de carbure de silicium par brasage non-réactif sous une atmosphère oxydante, chacune des pièces (1, 2, 22, 26, 41, 42, 81, 82) comprenant une surface (4, 5, 21, 25) à assembler, dans lequel on met en contact les pièces (1, 2, 22, 26, 41, 42, 81, 82) avec une composition de brasure (3, 23, 46) non-réactive, on chauffe l'ensemble formé par les pièces (1, 2, 22, 26, 41, 42, 81, 82) et la composition de brasure (3, 23, 46) à une température de brasage suffisante pour soit faire fondre totalement ou au moins partiellement la composition de brasure (3, 23, 46), soit rendre visqueuse la composition de brasure (3, 23, 46), et on refroidit les pièces (1, 2, 22, 26, 41, 42, 81, 82) et la composition de brasure (3, 23, 46) afin de former après refroidissement de celle-ci jusqu'à la température ambiante un joint moyennement réfractaire ; dans lequel la composition de brasure (3, 23, 46) non réactive est une composition A constituée de silice (SiO₂), d'alumine (Al₂O₃), et d'oxyde de calcium (CaO), ou bien une composition B, constituée d'alumine (Al₂O₃), d'oxyde de calcium (CaO), et d'oxyde de magnésium (MgO), procédé **caractérisé en ce que** avant de chauffer l'ensemble formé par les pièces (1, 2, 22, 26, 41, 42, 81, 82) et la composition de brasure (3, 23, 46) à la température de brasage, on réalise un apport en silicium sous forme non oxydée sur les surfaces (4, 5, 21, 25) à assembler des pièces (1, 2, 22, 26, 41, 42, 81, 82) à assembler et/ou dans les couches de surface comprenant les surfaces (4, 5, 21, 25) à assembler des pièces (1, 2, 22, 26, 41, 42, 81, 82) à assembler, et/ou dans la composition de brasure (3, 23, 46).

2. Procédé selon la revendication 1, dans lequel l'atmosphère oxydante est une atmosphère contenant de l'oxygène, telle qu'une atmosphère d'air, d'argon oxygéné ou d'hélium oxygéné.

3. Procédé selon la revendication 1 ou 2, dans lequel l'apport en silicium est réalisé en préparant un revêtement en silicium sur les surfaces à assembler des pièces ; de préférence le revêtement en silicium est préparé par un procédé de dépôt chimique en phase vapeur, un procédé de dépôt physique en phase vapeur, un procédé de dépôt physique en phase vapeur par faisceau d'électrons, ou par un procédé de dépôt en phase liquide.

4. Procédé selon la revendication 1 ou 2, dans lequel l'apport en silicium est réalisé dans les couches de surface comprenant les surfaces à assembler des pièces, les couches de surface étant constituées par du SiC enrichi en silicium par rapport à la stoechiométrie du SiC, ou par du silicium pur.

5. Procédé selon la revendication 1 ou 2, dans lequel l'apport en silicium non oxydé est réalisé dans la composition de brasure.

6. Procédé selon la revendication 5, dans lequel la composition de brasure est enrichie en silicium non oxydé dissous à une concentration en silicium non oxydé dissous allant jusqu'à la concentration correspondant à la saturation de la composition de brasure en silicium non oxydé dissous.

7. Procédé selon la revendication 6, dans lequel la composition de brasure est enrichie en silicium non oxydé dissous à une concentration qui est proche de la concentration correspondant à la saturation de la composition de brasure en silicium non oxydé dissous mais sans toutefois atteindre cette dernière, ou qui est égale à la concentration correspondant à la saturation de la composition de brasure en silicium non oxydé dissous, de préférence la teneur en silicium non oxydé dissous de la composition de brasure enrichie en silicium non oxydé dissous est de 0,1% à 2,6% en masse, de préférence de plus de 0,1% à 2,6% en masse, de préférence encore de 0,7% à 1,3% en masse, mieux de 0,7% à 1% en masse, par rapport à la masse totale de la composition de brasure et du silicium.

8. Procédé selon l'une quelconque des revendications précédentes, dans lequel la composition A est constituée, en pourcentages massiques, de 75% à 7% de SiO₂, de 60% à 6% de Al₂O₃ et de 60% à 10% de CaO; de préférence la composition A est constituée, en pourcentages massiques, de 70% à 55% de SiO₂, de 22% à 8% de Al₂O₃, et de 35% à 15% de CaO; de préférence encore la composition A est constituée, en pourcentages massiques, de 62% de SiO₂, de 15% de Al₂O₃, et de 23% de CaO.

9. Procédé selon la revendication 8, dans lequel la composition A est constituée, en pourcentages massiques, de 55% à 38% de SiO₂, de 25% à 12% de Al₂O₃, et de 45% à 30% de CaO; de préférence la composition A est constituée, en pourcentages massiques, de 42% de SiO₂, de 20% de Al₂O₃, et de 38% de CaO.

10. Procédé selon la revendication 8, dans lequel la composition A est constituée, en pourcentages massiques, de 38% à 8% de SiO₂, de 55% à 8% de Al₂O₃, et de 55% à 28% de CaO; de préférence la composition A est constituée, en pourcentages massiques, de 22% de SiO₂, de 37% de Al₂O₃, et de 41% de CaO.

11. Procédé selon l'une quelconque des revendications 1 à 7, dans lequel la composition B est constituée, en pourcentages massiques, de 70% à 35% de Al₂O₃, de 65% à 25% de CaO, et de 20% à 1% de MgO ; de préférence la composition B est constituée, en pourcentages massiques, de 50,5% de Al₂O₃, de 44,0% de CaO, et de 5,5% de MgO.

12. Procédé selon l'une quelconque des revendications précédentes, dans lequel de l'oxyde de titane est ajouté à la composition de brasure, et/ou de l'oxyde de bore est ajouté à la composition de brasure, et/ou du CaF₂ est ajouté à la composition de brasure.

13. Procédé selon l'une quelconque des revendications précédentes, dans lequel on forme une poudre de composition de brasure, on met en suspension cette poudre dans un liant organique de façon à obtenir une suspension ou pâte de composition de brasure, et on dépose sur au moins une surface d'au moins une des pièces à assembler la suspension ou pâte de composition de brasure obtenue ; de préférence on enduit une surface à assembler d'au moins l'une des pièces (1, 2) à assembler avec la suspension ou pâte de composition de brasure (3), puis on met en contact les surfaces (4, 5) à assembler des pièces (1, 2) de façon à ce que la suspension ou pâte (3) soit intercalée entre celles-ci (4, 5) ; ou bien les pièces (22, 26) à assembler sont mises en contact en observant un décalage entre celles-ci de façon à créer une surface libre (24) susceptible de recevoir la suspension ou pâte (23) à proximité du joint formé par les surfaces à assembler (21, 25) des pièces à assembler (22, 26), puis on dépose la suspension ou pâte (23) sur cette surface libre (24).

14. Procédé selon l'une quelconque des revendications précédentes, dans lequel le brasage est effectué à une température de brasage de 1050°C à 1350°C, de préférence de 1100°C à 1200°C, pendant une durée de 1 à 240 minutes, de préférence de 10 à 120 minutes.

15. Procédé selon l'une quelconque des revendications précédentes, dans lequel l'ensemble formé par les pièces et la composition de brasure est amené à la température de brasage en l'introduisant directement dans un dispositif, tel qu'un four, déjà porté à la température de brasage ; ou bien l'ensemble formé par les pièces et la composition de brasure est amené à la température de brasage en observant une montée en température depuis la température ambiante.

16. Procédé selon l'une quelconque des revendications précédentes, dans lequel les matériaux à base de carbure de silicium sont choisis parmi les carbures de silicium purs tels que le carbure de silicium pur α (SiCα) ou β (SiCβ) et les matériaux composites à base de SiC tels que les composites à fibres et/ou à matrice de carbure de silicium.

17. Procédé selon l'une quelconque des revendications précédentes, dans lequel les matériaux à base de carbure de silicium sont choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC par exemple, à fibres ou à « whiskers » ; les composites SiC/SiC à matrice auto-cicatrisante ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

18. Procédé selon l'une quelconque des revendications précédentes, dans lequel lesdits matériaux à base de carbure de silicium ont une teneur en carbure de silicium au moins égale à 50% en masse, de préférence au moins égale à 80% en masse, de préférence encore égale à 100% en masse.

19. Composition de brasure B, constituée d'alumine (Al₂O₃), d'oxyde de calcium (CaO), et d'oxyde de magnésium (MgO), **caractérisée en ce que** ladite composition de brasure comprend en outre du silicium dissous, non oxydé.

20. Composition de brasure selon la revendication 19, dans laquelle de l'oxyde de titane et/ou de l'oxyde de bore et/ou du CaF₂ est ajouté à la composition de brasure.

21. Suspension ou pâte de composition de brasure comprenant une poudre d'une composition de brasure en suspension dans un liant organique ; ladite composition de brasure étant choisie parmi une composition A constituée de silice (SiO₂), d'alumine (Al₂O₃), et d'oxyde de calcium (CaO) et une composition B constituée d'alumine (Al₂O₃), d'oxyde de calcium (CaO), et d'oxyde de magnésium (MgO), **caractérisée en ce que** ladite composition de brasure comprend en outre du silicium dissous, non oxydé.

22. Suspension ou pâte de composition de brasure selon la revendication 21, dans laquelle de l'oxyde de titane et/ou de l'oxyde de bore et/ou du CaF₂ est (sont) ajouté(s) à la composition de brasure.

## Patentansprüche

1. Verfahren zum Zusammenfügen von zumindest zwei Teilen (1, 2, 22, 26, 41, 42, 81, 82) aus Materialien auf Basis von Siliciumcarbid durch nicht-reaktives Löten in einer oxidierenden Atmosphäre, wobei jedes der Teile (1, 2, 22, 26, 41, 42, 81, 82) eine zusammenzufügende Fläche (4, 5, 21, 25) enthält, wobei die Teile (1, 2, 22, 26, 41, 42, 81, 82) mit einer nicht-reaktiven Lötzusammensetzung (3, 23, 46) in Kontakt gebracht werden, die aus den Teilen (1, 2, 22, 26, 41, 42, 81, 82) und der Lötzusammensetzung (3, 23, 46) gebildete Einheit auf eine Löttemperatur erhitzt wird, die ausreicht, um entweder vollständig oder zumindest teilweise die Lötzusammensetzung (3, 23, 46) aufzuschmelzen oder die Lötzusammensetzung (3, 23, 46) viskos zu machen, und die Teile (1, 2, 22, 26, 41, 42, 81, 82) und die Lötzusammensetzung (3, 23, 46) abgekühlt werden, um nach dem Abkühlen derselben auf Raumtemperatur eine mittelmäßig feuerfeste Fuge zu bilden; wobei die nicht-reaktive Lötzusammensetzung (3, 23, 46) eine Zusammensetzung A ist, die aus Siliciumdioxid (SiO₂), Aluminiumoxid (Al₂O₃) und Calciumoxid (CaO) besteht, oder aber eine Zusammensetzung B ist, die aus Aluminiumoxid (Al₂O₃), Calciumoxid (CaO) und Magnesiumoxid (MgO) besteht, wobei das Verfahren **dadurch gekennzeichnet ist, dass** vor dem Erhitzen der aus den Teilen (1, 2, 22, 26, 41, 42, 81, 82) und der Lötzusammensetzung (3, 23, 46) gebildeten Einheit auf die Löttemperatur ein Zuführen von Silicium in nicht oxidierter Form auf die zusammenzufügenden Flächen (4, 5, 21, 25) der zusammenzufügenden Teile (1, 2, 22, 26, 41, 42, 81, 82) und/oder in die Oberflächenschichten, die die zusammenzufügenden Flächen (4, 5, 21, 25) der zusammenzufügenden Teile (1, 2, 22, 26, 41, 42, 81, 82) enthalten, und/oder in die Lötzusammensetzung erfolgt.

2. Verfahren nach Anspruch 1, wobei die oxidierende Atmosphäre eine Sauerstoff enthaltende Atmosphäre, wie etwa eine Atmosphäre aus Luft, sauerstoffhaltigem Argon oder sauerstoffhaltigem Helium, ist.

3. Verfahren nach Anspruch 1 oder 2, wobei die Zufuhr von Silicium dadurch erfolgt, dass eine Siliciumbeschichtung auf den zusammenzufügenden Flächen der Teile hergestellt wird; wobei vorzugsweise die Siliciumbeschichtung durch ein Verfahren zur chemischen Dampfabscheidung, ein Verfahren zur physikalischen Dampfabscheidung, ein Verfahren zur physikalischen Dampfabscheidung durch Elektronenstrahl oder durch ein Verfahren zur Flüssigphasenabscheidung erfolgt.

4. Verfahren nach Anspruch 1 oder 2, wobei die Zufuhr von Silicium in die Oberflächenschichten erfolgt, die die zusammenzusetzenden Flächen der Teile enthalten, wobei die Oberflächenschichten aus SiC, angereichert mit Silicium bezüglich der SiC-Stöchiometrie bestehen, oder aus reinem Silicium bestehen.

5. Verfahren nach Anspruch 1 oder 2, wobei die Zufuhr von nicht oxidiertem Silicium in die Lötzusammensetzung erfolgt.

6. Verfahren nach Anspruch 5, wobei die Lötzusammensetzung mit gelöstem, nicht oxidiertem Silicium in einer Konzentration an gelöstem, nicht oxidiertem Silicium angereichert wird, die bis zur Konzentration reicht, die der Sättigung der Lötzusammensetzung mit gelöstem, nicht oxidiertem Silicium entspricht.

7. Verfahren nach Anspruch 6, wobei die Lötzusammensetzung mit gelöstem, nicht oxidiertem Silicium in einer Konzentration angereichert wird, die nahe der Konzentration ist, die der Sättigung der Lötzusammensetzung mit gelöstem, nicht oxidiertem Silicium entspricht, ohne jedoch diese zu erreichen, oder die gleich der Konzentration ist, die der Sättigung der Lötzusammensetzung mit gelöstem, nicht oxidiertem Silicium entspricht, wobei vorzugsweise der Gehalt an gelöstem, nicht oxidiertem Silicium der mit gelöstem, nicht oxidiertem Silicium angereicherten Lötzusammensetzung 0,1 Masse-% bis 2,6 Masse-%, vorzugsweise mehr als 0,1 Masse-% bis 2,6 Masse-%, noch bevorzugter 0,7 Masse-% bis 1,3 Masse-%, besser 0,7 Masse-% bis 1 Masse-% bezüglich der Gesamtmasse der Lötzusammensetzung und des Siliciums beträgt.

8. Verfahren nach einem der vorangehenden Ansprüche, wobei die Zusammensetzung A in Massenprozent aus 75 % bis 7 % SiO₂, 60 % bis 6 % Al₂O₃ und 60 % bis 10 % CaO besteht; wobei bevorzugt die Zusammensetzung A in Massenprozent aus 70 % bis 55 % SiO₂, 22 % bis 8 % Al₂O₃ und 35 % bis 15 % CaO besteht; wobei noch bevorzugter die Zusammensetzung A in Massenprozent aus 62 % SiO₂, 15 % Al₂O₃ und 23 % CaO besteht.

9. Verfahren nach Anspruch 8, wobei die Zusammensetzung A in Massenprozent aus 55 % bis 38 % SiO₂, 25 % bis 12 % Al₂O₃ und 45 % bis 30 % CaO besteht; wobei vorzugsweise die Zusammensetzung A in Massenprozent aus 42 % SiO₂, 20 % Al₂O₃ und 38 % CaO besteht.

10. Verfahren nach Anspruch 8, wobei die Zusammensetzung A in Massenprozent aus 38 % bis 8 % SiO₂, 55 % bis 8 % Al₂O₃ und 55 % bis 28 % CaO besteht; wobei vorzugsweise die Zusammensetzung A in Massenprozent aus 22 % SiO₂, 37 % Al₂O₃ und 41 % CaO besteht.

11. Verfahren nach einem der Ansprüche 1 bis 7, wobei die Zusammensetzung B in Massenprozent aus 70 % bis 35 % Al₂O₃, 65 % bis 25 % CaO und 20 % bis 1 % MgO besteht; wobei vorzugsweise die Zusammensetzung B in Massenprozent aus 50,5 % Al₂O₃, 44 % CaO und 5,5 % MgO besteht.

12. Verfahren nach einem der vorangehenden Ansprüche, wobei der Lötzusammensetzung Titanoxid zugegeben wird und/oder der Lötzusammensetzung Boroxid zugegeben wird und/oder der Lötzusammensetzung CaF₂ zugegeben wird.

13. Verfahren nach einem der vorangehenden Ansprüche, wobei ein Pulver einer Lötzusammensetzung gebildet wird, dieses Pulver unter Erhalten einer Lötzusammensetzungssuspension oder -paste so in einem organischen Bindemittel suspendiert wird und zumindest auf eine Fläche der zusammenzufügenden Teile die erhaltene Lötzusammensetzungssuspension oder -paste aufgebracht wird; wobei vorzugsweise eine zusammenzufügende Fläche zumindest eines der zusammenzufügenden Teile (1, 2) mit der Lötzusammensetzungssuspension oder -paste (3) überzogen wird, dann die zusammenzufügenden Flächen (4, 5) der Teile (1, 2) so in Kontakt gebracht werden, dass sich die Suspension bzw. Paste (3) zwischen diesen (4, 5) einlagert; oder die zusammenzufügenden Teile (22, 26) unter Einhalten eines Versatzes dazwischen so in Kontakt gebracht werden, dass eine zur Aufnahme der Suspension oder Paste (3) geeignete frei Fläche nahe des durch die zusammenzufügenden Flächen (21, 25) der zusammenzufügenden Teile (22, 26) gebildeten Fuge geschaffen wird und dann die Suspension oder Paste (23) auf diese freie Fläche (24) aufgetragen wird.

14. Verfahren nach einem der vorangehenden Ansprüche, wobei das Löten bei einer Löttemperatur von 1050 °C bis 1350 °C, vorzugsweise von 1100 °C bis 1200 °C für eine Dauer von 1 bis 240 Minuten, vorzugsweise 10 bis 120 Minuten, erfolgt.

15. Verfahren nach einem der vorangehenden Ansprüche, wobei die aus den Teilen und der Lötzusammensetzung gebildete Einheit auf die Löttemperatur gebracht wird, indem sie direkt in eine Vorrichtung, wie etwa in einen Ofen, eingeführt wird, die bereits auf die Löttemperatur gebracht ist; oder die aus den Teilen und der Lötzusammensetzung gebildete Einheit auf die Löttemperatur gebracht wird, indem ein Temperaturanstieg ausgehend von der Raumtemperatur eingehalten wird.

16. Verfahren nach einem der vorangehenden Ansprüche, wobei die Materialien auf Basis von Siliciumcarbid ausgewählt sind aus reinen Siliciumcarbiden, wie etwa reinem α- (SiCα) oder β-Siliciumcarbid (SiCβ) und Verbundmaterialien auf Basis von SiC, wie etwa Verbundmaterialien mit Fasern und/oder einer Matrix aus Siliciumcarbid.

17. Verfahren nach einem der vorangehenden Ansprüche, wobei die Materialien auf Basis von Siliciumcarbid aus drucklos gesintertem Siliciumcarbid ("PLS-SiC"); siliciuminfiltriertem Siliciumcarbid ("SiSiC" oder "RBSC"); porösem, rekristallisiertem Siliciumcarbid ("RSiC"); Graphit-Silicium ("C-SiC"), das aus Graphit besteht und mit einer Schicht aus SiC überzogen ist; SiC/SiC-Verbundmaterialien, zum Beispiel mit Fasern oder "Whiskern"'; SiC/SiC-Verbundmaterialien mit selbstheilender Matrix; C/SiC-Verbundmaterialien, zum Beispiel mit Kohlenstoffasern oder -"Whiskern" und mit einer SiC-Matrix; SiC-Einkristallen; und Verbundmaterialien aus SiC mit einem anderen keramischen Material, wie zum Beispiel den Verbundmaterialien SiC/Si₃N₄ und SiC/TiN ausgewählt sind.

18. Verfahren nach einem der vorangehenden Ansprüche, wobei die Materialien auf Basis von Siliciumcarbid einen Gehalt an Siliciumcarbid von zumindest 50 Massen-%, vorzugsweise zumindest 80 Massen-% und noch bevorzugter 100 Massen-% aufweisen.

19. Lötzusammensetzung B, bestehend aus Aluminiumoxid (Al₂O₃), Calciumoxid (CaO) und Magnesiumoxid (MgO), **dadurch gekennzeichnet, dass** die Lötzusammensetzung ferner gelöstes, nicht oxidiertes Silicium enthält.

20. Lötzusammensetzung nach Anspruch 19, wobei der Lötzusammensetzung Titanoxid und/oder Boroxid und/oder CaF₂ zugegeben ist.

21. Suspension oder Paste einer Lötzusammensetzung, enthaltend ein Pulver der Lötzusammensetzung in Suspension in einem organischen Bindemittel; wobei die Lötzusammensetzung ausgewählt ist aus einer Zusammensetzung A, die aus Siliciumdioxid (SiO₂), Aluminiumoxid (Al₂O₃) und Calciumoxid (CaO) besteht, und einer Zusammensetzung B, die aus Aluminiumoxid (Al₂O₃), Calciumoxid (CaO) und Magnesiumoxid (MgO) besteht, **dadurch gekennzeichnet ist, dass** die Lötzusammensetzung ferner gelöstes, nicht oxidiertes Silicium enthält.

22. Suspension oder Paste der Lötzusammensetzung nach Anspruch 21, wobei der Lötzusammensetzung Titanoxid und/oder Boroxid und/oder CaF₂ zugegeben ist (sind).

## Claims

1. Method for assembling at least two parts (1, 2, 22, 26, 41, 42, 81, 82) made of silicon carbide based materials by non-reactive brazing in an oxidizing atmosphere, each of the parts (1, 2, 22, 26, 41, 42, 81, 82) comprising a surface (4, 5, 21, 25) to be assembled, wherein the parts (1, 2, 22, 26, 41, 42, 81, 82) are placed in contact with a non-reactive brazing composition (3, 23, 46), the assembly formed by the parts (1, 2, 22, 26, 41, 42, 81, 82) and the brazing composition (3, 23, 46) is heated to a brazing temperature sufficient for completely or at least partially melting the brazing composition (3, 23, 46), or rendering the brazing composition (3, 23, 46) viscous, and the parts (1, 2, 22, 26, 41, 42, 81, 82) and the brazing composition (3, 23, 46) are cooled so as to form after the cooling of the latter to ambient temperature a moderately refractory joint; wherein the non-reactive brazing composition (3, 23, 46) is a composition A consisting of silica (SiO₂), alumina (Al₂O₃) and calcium oxide (CaO), or a composition B, consisting of alumina (Al₂O₃), calcium oxide (CaO) and magnesium oxide (MgO), method **characterized in that** before heating the assembly formed by the parts (1, 2, 22, 26, 41, 42, 81, 82) and the brazing composition (3, 23, 46) to the brazing temperature, a supply of silicon in a non-oxidized form is carried out on the surfaces (4, 5, 21, 25) to be assembled of the parts (1, 2, 22, 26, 41, 42, 81, 82) to be assembled and/or in the surface layers comprising the surfaces (4, 5, 21, 25) to be assembled of the parts (1, 2, 22, 26, 41, 42, 81, 82) to be assembled, and/or in the brazing composition (3, 23, 46).

2. Method according to claim 1, wherein the oxidizing atmosphere is an atmosphere containing oxygen, such as an atmosphere of air, of oxygenated argon or of oxygenated helium.

3. Method according to claim 1 or 2, wherein the supply of silicon is carried out by preparing a silicon coating on the surfaces to be assembled of the parts; preferably the silicon coating is prepared by a chemical vapour deposition method, a physical vapour deposition method, an electron beam physical vapour deposition method, or by a liquid phase deposition method.

4. Method according to claim 1 or 2, wherein the supply of silicon is carried out in the surface layers comprising the surfaces to be assembled of the parts, the surface layers consisting of silicon enriched SiC compared to the SiC stoichiometry, or of pure silicon.

5. Method according to claim 1 or 2, wherein the supply of non-oxidized silicon is carried out in the brazing composition.

6. Method according to claim 5, wherein the brazing composition is enriched with non-oxidized silicon dissolved at a concentration of non-oxidized dissolved silicon extending up to the concentration corresponding to the saturation of the brazing composition in non-oxidized dissolved silicon.

7. Method according to claim 6, wherein the brazing composition is enriched with non-oxidized dissolved silicon at a concentration that is close to the concentration corresponding to the saturation of the brazing composition in non-oxidized dissolved silicon but without nevertheless attaining the latter, or which is equal to the concentration corresponding to the saturation of the brazing composition in non-oxidized dissolved silicon, preferably the non-oxidized dissolved silicon content of the brazing composition enriched with non-oxidized dissolved silicon is 0.1% to 2.6% by weight, preferably more than 0.1% to 2.6% by weight, even more preferably 0.7% to 1.3% by weight, better 0.7% to 1% by weight, compared to the total weight of the brazing composition and of silicon.

8. Method according to any one of the preceding claims, wherein composition A consists, in weight percentages, of 75% to 7% of SiO₂, 60% to 6% of Al₂O₃ and 60% to 10% of CaO; preferably composition A consists, in weight percentages, of 70% to 55% of SiO₂, 22% to 8% of Al₂O₃, and 35% to 15% of CaO; still preferably composition A consists, in weight percentages, of 62% of SiO₂, 15% of Al₂O₃, and 23% of CaO.

9. Method according to claim 8, wherein composition A consists, in weight percentages, of 55% to 38% of SiO₂, 25% to 12% of Al₂O₃, and 45% to 30% of CaO; preferably composition A consists, in weight percentages, of 42% of SiO₂, 20% of Al₂O₃, and 38% of CaO.

10. Method according to claim 8, wherein composition A consists, in weight percentages, of 38% to 8% of SiO₂, 55% to 8% of Al₂O₃, and 55% to 28% of CaO; preferably composition A consists, in weight percentages, of 22% of SiO₂, 37% of Al₂O₃, and 41% of CaO.

11. Method according to any of claims 1 to 7, wherein composition B consists, in weight percentages, of 70% to 35% of Al₂O₃, 65% to 25% of CaO, and 20% to 1% of MgO; preferably composition B consists, in weight percentages, of 50.5% of Al₂O₃, 44.0% of CaO, and 5.5% of MgO.

12. Method according to any one of the preceding claims, wherein titanium oxide is added to the brazing composition, and/or boron oxide is added to the brazing composition, and/or CaF₂ is added to the brazing composition.

13. Method according to any one of the preceding claims, wherein a powder of brazing composition is formed, said powder is suspended in an organic binder in order to obtain a brazing composition suspension or paste, and the brazing composition suspension or paste obtained is deposited on at least one surface of at least one of the parts to be assembled; preferably a surface to be assembled of at least one of the parts (1, 2) to be assembled is coated with the brazing composition (3) suspension or paste, then the surfaces (4, 5) to be assembled of the parts (1, 2) are placed in contact so that the suspension or paste (3) is intercalated between them; or else the parts (22, 26) to be assembled are placed in contact while observing an offset between them so as to create a free surface (24) capable of receiving the suspension or paste (23) near to the joint formed by the surfaces to be assembled (21, 25) of the parts to be assembled (22, 26), then the suspension or paste (23) is deposited on said free surface (24).

14. Method according to any one of the preceding claims, wherein the brazing is carried out at a brazing temperature of 1050°C to 1350°C, preferably 1100°C to 1200°C, for a duration of 1 to 240 minutes, preferably 10 to 120 minutes.

15. Method according to any one of the preceding claims, wherein the assembly formed by the parts and the brazing composition is taken to the brazing temperature by introducing it directly into a device, such as a furnace, already taken to the brazing temperature; or else the assembly formed by the parts and the brazing composition is taken to the brazing temperature while observing a rise in temperature from ambient temperature.

16. Method according to anyone of the preceding claims, wherein the silicon carbide based materials are selected from pure silicon carbides such as pure α (SiCα) or β (SiCβ) silicon carbide and composite SiC based materials such as composites with silicon carbide fibres and/or with a silicon carbide matrix.

17. Method according to any one of the preceding claims, wherein the silicon carbide based materials are selected from pressureless sintered silicon carbide ("PLS-SiC") ; Si infiltrated silicon carbide ("SiSiC" or "RBSC"); recrystallized porous silicon carbide ("RSiC"); silicon graphite ("C-SiC") consisting of graphite and covered with a layer of SiC; SiC/SiC composites for example, with fibres or with "whiskers"; SiC/SiC composites with self-healing matrix; C/SiC composites, for example, with carbon fibres or "whiskers" and SiC matrix; monocrystals of SiC; composites of SiC with another ceramic, for example SiC/Si₃N₄ and SiC/TiN composites.

18. Method according to any one of the preceding claims, wherein said silicon carbide based materials have a silicon carbide content at least equal to 50% by weight, preferably at least equal to 80% by weight, even more preferably equal to 100% by weight.

19. Brazing composition B, consisting of alumina (Al₂O₃), calcium oxide (CaO), and magnesium oxide (MgO), **characterized in that** said brazing composition further comprises non-oxidized, dissolved silicon.

20. Brazing composition according to claim 19, wherein titanium oxide and/or boron oxide and/or CaF₂ is added to the brazing composition.

21. Brazing composition suspension or paste comprising a powder of a brazing composition in suspension in an organic binder; said brazing composition being selected from a composition A consisting of silica (SiO₂), alumina (Al₂O₃), and calcium oxide (CaO) and a composition B consisting of alumina (Al₂O₃), calcium oxide (CaO), and magnesium oxide (MgO), **characterized in that** said brazing composition further comprises non-oxidized, dissolved silicon.

22. Brazing composition suspension or paste according to claim 21, wherein titanium oxide and/or boron oxide and/or CaF₂ is (are) added to the brazing composition.
